# EUROPEAN PATENT APPLICATION

(11) **EP 4 836 287 A1**
(43) Date of publication of application: **04.11.2026**
(21) Application number: 24912254.0
(22) Date of filing: 04.12.2024
(51) Int. Cl.: H02P 21/22, H02P 27/08

(54) **CONTROL DEVICE FOR ROTARY ELECTRIC MACHINE, PROGRAM, AND CONTROL METHOD FOR ROTARY ELECTRIC MACHINE**

(30) Priority: 26.12.2023 JP 2023219450
(71) Applicant: DENSO CORPORATION, Kariya-city, Aichi 448-8661 (JP)
(72) Inventor: NAKASHIMA, Kotaro, Kariya-city, Aichi 448-8661 (JP)
(74) Representative: TBK
(86) International application number: PCT/JP2024/042879
(87) International publication number: WO 2025/142364

(57) **Abstract**

A control apparatus (70) includes a setting unit (86), a switch control unit (87) and a lock determination unit (88). The setting unit sets a control mode of first upper-arm and first lower-arm switches (SUHa to SWHa, SULa to SWLa) and second upper-arm and second lower-arm switches (SUHb to SWHb, SULb to SWLb). The switch control unit controls the first upper-arm and first lower-arm switches and the second upper-arm and second lower-arm switches to the set control mode. The lock determination unit determines whether a rotor (41) of the rotating electric machine is in a locked state, which is a rotation-stopped state or an extremely low-speed rotation state, during control by the switch control unit. Moreover, when it is determined by the lock determination unit that the rotor is in the locked state, the setting unit executes overheat protection control for preventing occurrence of an overheated state in the system.

## Description

### [CROSS-REFERENCE TO RELATED APPLICATION]

The present application is based on Japanese Patent Application No. 2023-219450 filed on December 26, 2023, the entire contents of which are incorporated by reference into the present description.

### [TECHNICAL FIELD]

The present disclosure relates to control apparatuses for rotating electric machines, programs, and control methods for rotating electric machines.

### [BACKGROUND ART]

Conventionally, systems have been known in which drive control of a rotating electric machine is performed by two inverters. In these systems, a first inverter is electrically connected with first ends of armature windings of a plurality of phases included in the rotating electric machine; and a second inverter is electrically connected with second ends of the armature windings. The drive control of the rotating electric machine is performed through switching control of the first and second inverters, thereby achieving higher output and higher efficiency of the system. An example of such a technique is disclosed in Patent Document 1.

### [PRIOR ART LITERATURE]

### [PATENT LITERATURE]

[Patent Document 1]: Japanese Unexamined Patent Application Publication No. JP 2023045715 A

### [SUMMARY OF THE INVENTION]

In the above-described systems, when the rotating electric machine generates torque with electric current supplied to the armature windings, the output torque of the rotating electric machine may become equal to the load torque acting on a rotor of the rotating electric machine. In this case, the rotor will be brought into a rotation-stopped state or an extremely low-speed rotation state. Consequently, electric current may concentrate in the armature winding of one of the plurality of phases, thereby bringing the system, which includes the first and second inverters, into an overheated state.

A primary object of the present disclosure is to provide a control apparatus for a rotating electric machine, a program, and a control method for a rotating electric machine, which can prevent the system from entering an overheated state.

According to the present disclosure, there is provided a control apparatus applicable to a system,
the system comprising:
a rotating electric machine having armature windings respectively of a plurality of phases;
a first inverter having series connection units respectively of the plurality of phases, each of the series connection units consisting of a first upper-arm switch and a first lower-arm switch that are connected in series with each other, each of the series connection units being connected in parallel with a DC power source;
a second inverter having series connection units respectively of the plurality of phases, each of the series connection units consisting of a second upper-arm switch and a second lower-arm switch that are connected in series with each other;
a positive-electrode-side bus electrically connecting, for each of the plurality of phases, a higher-potential-side terminal of the first upper-arm switch of the phase and a higher-potential-side terminal of the second upper-arm switch of the phase; and
a negative-electrode-side bus electrically connecting, for each of the plurality of phases, a lower-potential-side terminal of the first lower-arm switch of the phase and a lower-potential-side terminal of the second lower-arm switch of the phase,
wherein:
   for each of the plurality of phases, both a lower-potential-side terminal of the first upper-arm switch of the phase and a higher-potential-side terminal of the first lower-arm switch of the phase are electrically connected with a first end of the armature winding of the phase; and
   for each of the plurality of phases, both a lower-potential-side terminal of the second upper-arm switch of the phase and a higher-potential-side terminal of the second lower-arm switch of the phase are electrically connected with a second end of the armature winding of the phase,
   the control apparatus comprising:
      a setting unit configured to set a control mode of the first upper-arm switches, the first lower-arm switches, the second upper-arm switches and the second lower-arm switches;
      a switch control unit configured to control the first upper-arm switches, the first lower-arm switches, the second upper-arm switches and the second lower-arm switches to the set control mode; and
      a lock determination unit configured to determine whether a rotor of the rotating electric machine is in a locked state, which is a rotation-stopped state or an extremely low-speed rotation state, during control by the switch control unit,
      wherein
      the setting unit is further configured to execute, when it is determined by the lock determination unit that the rotor is in the locked state, overheat protection control for preventing occurrence of an overheated state in the system.

With the above configuration, it becomes possible to prevent the system from entering an overheated state.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is an overall configuration diagram of a control system according to a first embodiment;
FIG. 2 is a functional block diagram of a control process executed by a control apparatus according to the first embodiment;
FIG. 3 is a diagram illustrating the control mode of Y drive control;
FIG. 4 is a diagram illustrating the control mode of H drive control;
FIG. 5 is a time chart illustrating an example of a drive signal generation method;
FIG. 6 is a diagram illustrating an example of an electric current flow manner when a rotor of a rotating electric machine is brought into a locked state during the Y drive control;
FIG. 7 is a flowchart of an overheat protection control process;
FIG. 8 is a time chart illustrating the temporal changes of a carrier signal and PWM signals in a first inverter before the overheat protection control;
FIG. 9 is a time chart illustrating the temporal changes of a carrier signal and PWM signals in a second inverter before the overheat protection control;
FIG. 10 is a time chart illustrating the temporal changes of the carrier signal and the PWM signals in the first inverter during the overheat protection control;
FIG. 11 is a time chart illustrating the temporal changes of the carrier signal and the PWM signals in the second inverter during the overheat protection control;
FIG. 12 is a comparison diagram illustrating the temporal changes of the V-phase PWM signals before and after the overheat protection control;
FIG. 13 is a diagram illustrating an example of an electric current flow manner in an A mode;
FIG. 14 is a diagram illustrating an example of an electric current flow manner in a B mode;
FIG. 15 is a diagram illustrating an example of an electric current flow manner in a C mode;
FIG. 16 is a diagram illustrating an example of an electric current flow manner in a D mode;
FIG. 17 is a flowchart of an overheat protection control process according to a second embodiment;
FIG. 18 is a time chart illustrating the effects of the overheat protection control according to the second embodiment;
FIG. 19 is a functional block diagram of a control process executed by a control apparatus according to the second embodiment;
FIG. 20 is a flowchart of an overheat protection control process according to a third embodiment;
FIG. 21 is a diagram illustrating the manner of the overheat protection control according to the third embodiment;
FIG. 22 is a diagram illustrating an electric current flow manner according to a comparative example;
FIG. 23 is a diagram illustrating the manner of overheat protection control according to a modification of the third embodiment;
FIG. 24 is a diagram illustrating the manner of overheat protection control according to another modification of the third embodiment;
FIG. 25 is a flowchart of an overheat protection control process according to a fourth embodiment;
FIG. 26 is an overall configuration diagram of a control system according to a fifth embodiment;
FIG. 27 is a flowchart of an overheat protection control process according to the fifth embodiment;
FIG. 28 is a diagram illustrating the manner of upper-arm neutral-point control according to the fifth embodiment;
FIG. 29 is a diagram illustrating the manner of lower-arm neutral-point control according to the fifth embodiment;
FIG. 30 is an overall configuration diagram of a control system according to a sixth embodiment;
FIG. 31 is a flowchart of an overheat protection control process according to the sixth embodiment;
FIG. 32 is a diagram illustrating the manner of first upper-arm neutral-point control according to the sixth embodiment;
FIG. 33 is a diagram illustrating the manner of first lower-arm neutral-point control according to the sixth embodiment;
FIG. 34 is a diagram illustrating the manner of second upper-arm neutral-point control according to the sixth embodiment;
FIG. 35 is a diagram illustrating the manner of second lower-arm neutral-point control according to the sixth embodiment;
FIG. 36 is a flowchart of an overheat protection control process according to another embodiment; and
FIG. 37 is a flowchart of an overheat protection control process according to yet another embodiment.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds and higher digits as appropriate. Moreover, it also should be noted that for corresponding and/or associated parts in one embodiment, reference may be made to the explanation thereof in the other embodiments.

### [First Embodiment]

Hereinafter, a first embodiment embodying a control apparatus according to the present disclosure will be described with reference to the drawings. In the present embodiment, the control apparatus is applied to a control system installed in an electrified vehicle such as an electric vehicle or a hybrid vehicle.

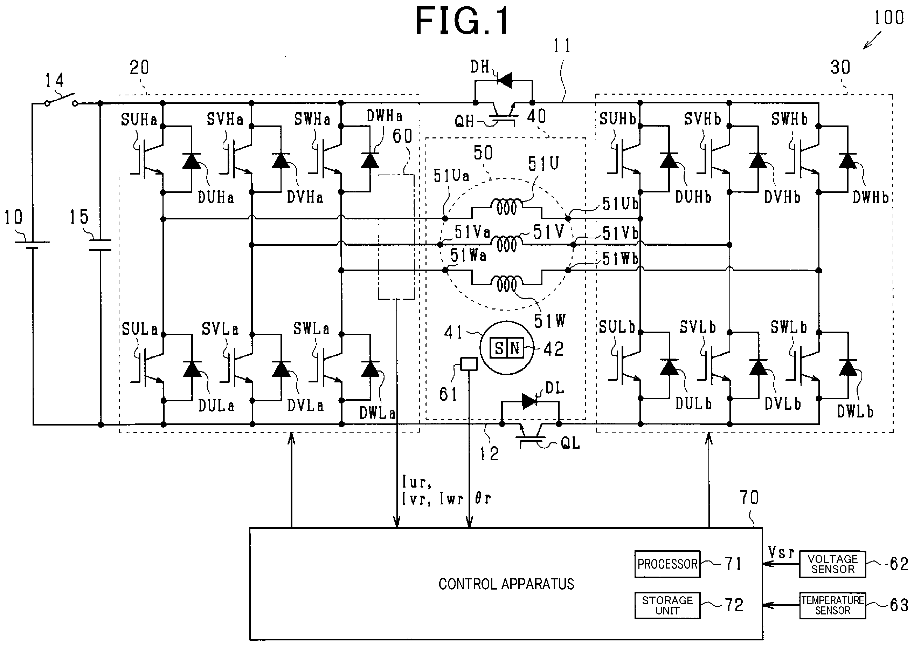

As shown in FIG. 1, the control system 100 includes a battery 10 that is a DC power source, a first inverter 20, a second inverter 30 and a rotating electric machine 40. The battery 10 may be implemented by, for example, an assembled battery that includes unit batteries connected in series with each other. Moreover, each unit battery may be implemented by, for example, a single battery cell or a plurality of battery cells connected in series with each other. Furthermore, each battery cell may be implemented by, for example, a secondary battery cell such as a lithium-ion battery cell.

Each of the first inverter 20 and the second inverter 30 includes an electric power conversion circuit that is configured to convert DC power supplied from the battery 10 into three-phase AC power and supply the three-phase AC power to the rotating electric machine 40.

The first inverter 20 includes: a U-phase series connection unit consisting of a U-phase first upper-arm switch SUHa and a U-phase first lower-arm switch SULa that are connected in series with each other; a V-phase series connection unit consisting of a V-phase first upper-arm switch SVHa and a V-phase first lower-arm switch SVLa that are connected in series with each other; and a W-phase series connection unit consisting of a W-phase first upper-arm switch SWHa and a W-phase first lower-arm switch SWLa that are connected in series with each other. Similarly, the second inverter 30 includes: a U-phase series connection unit consisting of a U-phase second upper-arm switch SUHb and a U-phase second lower-arm switch SULb that are connected in series with each other; a V-phase series connection unit consisting of a V-phase second upper-arm switch SVHb and a V-phase second lower-arm switch SVLb that are connected in series with each other; and a W-phase series connection unit consisting of a W-phase second upper-arm switch SWHb and a W-phase second lower-arm switch SWLb that are connected in series with each other.

In the present embodiment, each of the switches SUHa to SWLa and SUHb to SWLb is implemented by a voltage-controlled semiconductor switching element, more particularly by an IGBT. In this case, each of the switches SUHa to SWLa and SUHb to SWLb has its collector serving as a higher-potential-side terminal and its emitter serving as a lower-potential-side terminal. Moreover, each of the switches SUHa to SWLa and SUHb to SWLb has a freewheeling diode connected in antiparallel thereto. Specifically, each of the U-phase, V-phase and W-phase first upper-arm switches SUHa, SVHa and SWHa has a corresponding one of U-phase, V-phase and W-phase first upper-arm diodes DUHa, DVHa and DWHa connected in antiparallel thereto; and each of the U-phase, V-phase and W-phase first lower-arm switches SULa, SVLa and SWLa has a corresponding one of U-phase, V-phase and W-phase first lower-arm diodes DULa, DVLa and DWLa connected in antiparallel thereto. Similarly, each of the U-phase, V-phase and W-phase second upper-arm switches SUHb, SVHb and SWHb has a corresponding one of U-phase, V-phase and W-phase second upper-arm diodes DUHb, DVHb and DWHb connected in antiparallel thereto; and each of the U-phase, V-phase and W-phase second lower-arm switches SULb, SVLb and SWLb has a corresponding one of U-phase, V-phase and W-phase second lower-arm diodes DULb, DVLb and DWLb connected in antiparallel thereto.

The collectors of the first upper-arm switches SUHa, SVHa and SWHa of the respective phases and the collectors of the second upper-arm switches SUHb, SVHb and SWHb of the respective phases are connected with each other via a positive-electrode-side bus 11 which is an electrical path such as a busbar. On the other hand, the emitters of the first lower-arm switches SULa, SVLa and SWLa of the respective phases and the emitters of the second lower-arm switches SULb, SVLb and SWLb of the respective phases are connected with each other via a negative-electrode-side bus 12 which is also an electrical path such as a busbar. That is, the emitters of the second lower-arm switches SULb, SVLb and SWLb of the respective phases are connected with the negative-electrode-side bus 12.

The control system 100 further includes a power supply switch 14. The power supply switch 14 may be constituted of, for example, a semiconductor switching element or a mechanical relay. The power supply switch 14 connects the positive-electrode-side bus 11 and a positive electrode terminal of the battery 10. Specifically, upon being turned on, the power supply switch 14 electrically connects the positive electrode terminal of the battery 10 with the collectors of the first upper-arm switches SUHa, SVHa and SWHa of the respective phases. On the other hand, upon being turned off, the power supply switch 14 electrically disconnects the positive electrode terminal of the battery 10 from the collectors of the first upper-arm switches SUHa, SVHa and SWHa of the respective phases.

The control system 100 further includes a capacitor 15. The capacitor 15 functions as a smoothing capacitor. The capacitor 15 is connected in parallel with the series connection units of the first upper-arm switches SUHa, SVHa and SWHa and first lower-arm switches SULa, SVLa and SWLa of the respective phases.

The rotating electric machine 40 is an in-vehicle main machine serving as a driving power source of the vehicle. The rotating electric machine 40 includes a rotor 41 and a stator 50. The rotor 41 is configured so that mechanical power can be transmitted between it and drive wheels of the vehicle. In the present embodiment, the rotating electric machine 40 is configured as a permanent-magnet field synchronous machine. The rotor 41 includes permanent magnets 42 (e.g., neodymium magnets) as field poles.

The stator 50 includes, as armature windings, a U-phase winding 51U, a V-phase winding 51V and a W-phase winding 51W. The U-phase, V-phase and W-phase windings 51U, 51V and 51W are arranged, on a stator core of the stator 50, so as to be offset from each other by 120° in electrical angle. In addition, each of the U-phase, V-phase and W-phase windings 51U, 51V and 51W is an open winding.

A first end 51Ua of the U-phase winding 51U is connected with both the emitter of the U-phase first upper-arm switch SUHa and the collector of the U-phase first lower-arm switch SULa; a first end 51Va of the V-phase winding 51V is connected with both the emitter of the V-phase first upper-arm switch SVHa and the collector of the V-phase first lower-arm switch SVLa; and a first end 51Wa of the W-phase winding 51W is connected with both the emitter of the W-phase first upper-arm switch SWHa and the collector of the W-phase first lower-arm switch SWLa. On the other hand, a second end 51Ub of the U-phase winding 51U is connected with both the emitter of the U-phase second upper-arm switch SUHb and the collector of the U-phase second lower-arm switch SULb; a second end 51Vb of the V-phase winding 51V is connected with both the emitter of the V-phase second upper-arm switch SVHb and the collector of the V-phase second lower-arm switch SVLb; and a second end 51Wb of the W-phase winding 51W is connected with both the emitter of the W-phase second upper-arm switch SWHb and the collector of the W-phase second lower-arm switch SWLb.

The control system 100 further includes a changeover switch QH and a diode DH. The changeover switch QH is provided in the positive-electrode-side bus 11 (corresponding to a "target bus"). The changeover switch QH may be constituted of, for example, a semiconductor switching element or a mechanical relay. More particularly, in the present embodiment, the changeover switch QH is constituted of an IGBT. The changeover switch QH has its collector connected to the first inverter 20 side and its emitter connected to the second inverter 30 side. The diode DH is connected in antiparallel to the changeover switch QH.

Upon being turned on, the changeover switch QH electrically connects the collectors of the U-phase, V-phase and W-phase upper-arm switches SUHa, SVHa and SWHa of the first inverter 20 with the collectors of the U-phase, V-phase and W-phase upper-arm switches SUHb, SVHb and SWHb of the second inverter 30. On the other hand, upon being turned off, the changeover switch QH electrically disconnects the collectors of the U-phase, V-phase and W-phase upper-arm switches SUHa, SVHa and SWHa of the first inverter 20 from the collectors of the U-phase, V-phase and W-phase upper-arm switches SUHb, SVHb and SWHb of the second inverter 30.

The control system 100 further includes a current sensor 60, a rotation angle sensor 61, a voltage sensor 62 and a temperature sensor 63.

The current sensor 60 is configured to detect phase currents flowing respectively through the U-phase, V-phase and W-phase windings 51U, 51V and 51W. In the present embodiment, the current sensor 60 is provided on, of two sides of the U-phase, V-phase and W-phase windings 51U, 51V and 51W, the first inverter 20 side. Hereinafter, the sign of the phase currents is defined, in each phase, to be positive when the phase currents flow from the first ends 51Ua, 51Va and 51Wa to the second ends 51Ub, 51Vb and 51Wb of the U-phase, V-phase and W-phase windings 51U, 51V and 51W and to be negative when the phase currents flow from the second ends 51Ub, 51Vb and 51Wb to the first ends 51Ua, 51Va and 51Wa of the U-phase, V-phase and W-phase windings 51U, 51V and 51W. It should be noted that the current sensor 60 may alternatively be provided on, of the two sides of the U-phase, V-phase and W-phase windings 51U, 51V and 51W, the second inverter 30 side.

The rotation angle sensor 61 may be implemented by, for example, a resolver. The rotation angle sensor 61 is configured to detect the electrical angle of the rotor 41. The voltage sensor 62 is configured to detect the voltage between two terminals of the capacitor 15. The temperature sensor 63 is configured to detect temperatures of the first and second inverters 20 and 30. For example, the temperature sensor 63 may be configured to detect, as the temperatures of the first and second inverters 20 and 30, temperatures of the switches SUHa to SWLa and SUHb to SWLb constituting the respective inverters 20 and 30.

Detection values of the sensors 60 to 63 are inputted to the control apparatus 70 included in the control system 100. The control apparatus 70 is implemented by an ECU (Electronic Control Unit) that performs various controls of the control system 100. The control apparatus 70 includes, as hardware, a processor 71 and a storage unit 72. In addition, in the control system 100, each in-vehicle device may be controlled by an ECU corresponding to the in-vehicle device. However, in FIG. 1, for the sake of convenience, a plurality of ECUs are shown as a single control apparatus 70.

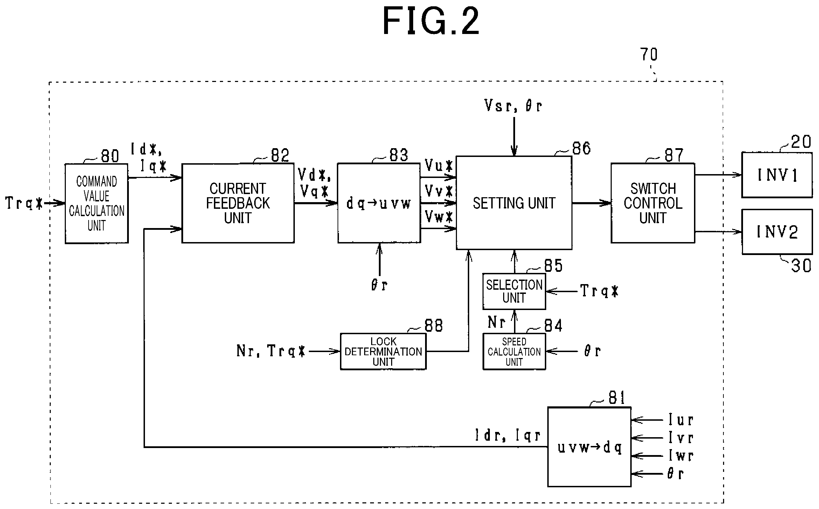

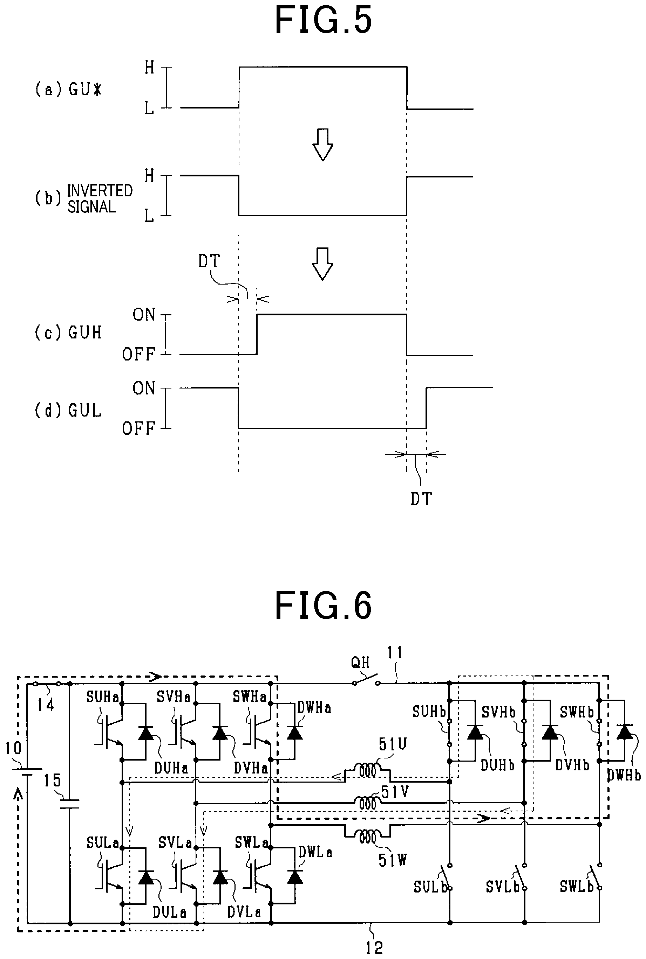

The storage unit 72 includes, as hardware, a memory and a storage. The memory is a storage device for storing data used for processes of the control apparatus 70. The memory provides the processor 71 with a workspace for temporary use when the processor 71 performs the processes. The memory may include, for example, a ROM or a RAM. The storage is a storage device that stores various programs and data to be read and executed by the processor 71. The storage is also a non-transitory tangible storage medium. The storage may include, for example, an HDD or a flash memory. The storage stores program information for the processes shown in FIGS. 2 and 6 which will be described later.

For example, program information stored in a non-transitory tangible storage medium may be installed in the storage unit 72. The storage medium may be, for example, a USB memory, a CD-ROM or a DVD. Moreover, for example, program information, which is transmitted by OTA (Over The Air) via a communication network, may also be installed in the storage unit 72.

FIG. 2 is a functional block diagram of a control process of the rotating electric machine 40 executed by the control apparatus 70.

A command value calculation unit 80 calculates, based on a command torque Trq* received from a control apparatus superordinate to the control apparatus 70, both a d-axis current command value Id* and a q-axis current command value Iq* in a d-q coordinate system.

A two-phase conversion unit 81 calculates, based on the phase currents Iur, Ivr and Iwr detected by the current sensor 60 and the electrical angle θr detected by the rotation angle sensor 61, both a d-axis current value Idr and a q-axis current value Iqr.

A current feedback unit 82 calculates, based on the d-axis and q-axis current command values Id* and Iq* and the d-axis and q-axis current values Idr and Iqr, a d-axis voltage command value Vd* and a q-axis voltage command value Vq*. Specifically, the current feedback unit 82 first calculates a d-axis current deviation, which is the difference between the d-axis current command value Id* and the d-axis current value Idr, and then calculates the d-axis voltage command value Vd* as a manipulated variable for feedback-controlling the calculated d-axis current deviation to zero. Moreover, the current feedback unit 82 also calculates a q-axis current deviation, which is the difference between the q-axis current command value Iq* and the q-axis current value Iqr, and then calculates the q-axis voltage command value Vq* as a manipulated variable for feedback-controlling the calculated q-axis current deviation to zero. In addition, the feedback control may be, for example, proportional-integral control.

A three-phase conversion unit 83 calculates, based on the d-axis and q-axis voltage command values Vd* and Vq* and the electrical angle θr, U-phase, V-phase and W-phase voltage command values Vu*, Vv* and Vw*. The U-phase, V-phase and W-phase voltage command values Vu*, Vv* and Vw* are command values of voltages applied respectively to the U-phase, V-phase and W-phase windings 51U, 51V and 51W. In the present embodiment, the sign of the voltages applied respectively to the U-phase, V-phase and W-phase windings 51U, 51V and 51W is defined to be positive when the electric potentials at the first ends 51Ua, 51Va and 51Wa of the windings 51U, 51V and 51W are higher than those at the second ends 51Ub, 51Vb and 51Wb of the windings 51U, 51V and 51W, and to be negative when the electric potentials at the second ends 51Ub, 51Vb and 51Wb are higher than those at the first ends 51Ua, 51Va and 51Wa.

A speed calculation unit 84 calculates, based on the electrical angle θr, the rotational speed Nr of the rotor 41.

The selection unit 85 selects whether the drive state of the control system 100 should be Y drive control or H drive control. In the present embodiment, the selection unit 85 selects whether the drive state should be the Y drive control or the H drive control based on the operating point of the rotating electric machine 40, which is determined by the calculated rotational speed Nr and the command torque Trq*, and control map information. The control map information is information in which regions of the Y drive control and the H drive control are defined in association with the rotational speed Nr and the command torque Trq*. The control map information is stored in the storage unit 72.

A setting unit 86 generates drive signals for the switches SUHa to SWLa and SUHb to SWLb of the first and second inverters 20 and 30. The drive signals include ON commands and OFF commands for the switches.

Specifically, the setting unit 86 calculates U-phase, V-phase and W-phase normalized command values Dutyu, Dutyv and Dutyw by normalizing the U-phase, V-phase and W-phase voltage command values Vu*, Vv* and Vw* with the power supply voltage Vsr which is the voltage detected by the voltage sensor 62. More specifically, the U-phase, V-phase and W-phase normalized command values Dutyu, Dutyv and Dutyw are values obtained by dividing the U-phase, V-phase and W-phase voltage command values Vu*, Vv* and Vw* by half of the power supply voltage Vsr.

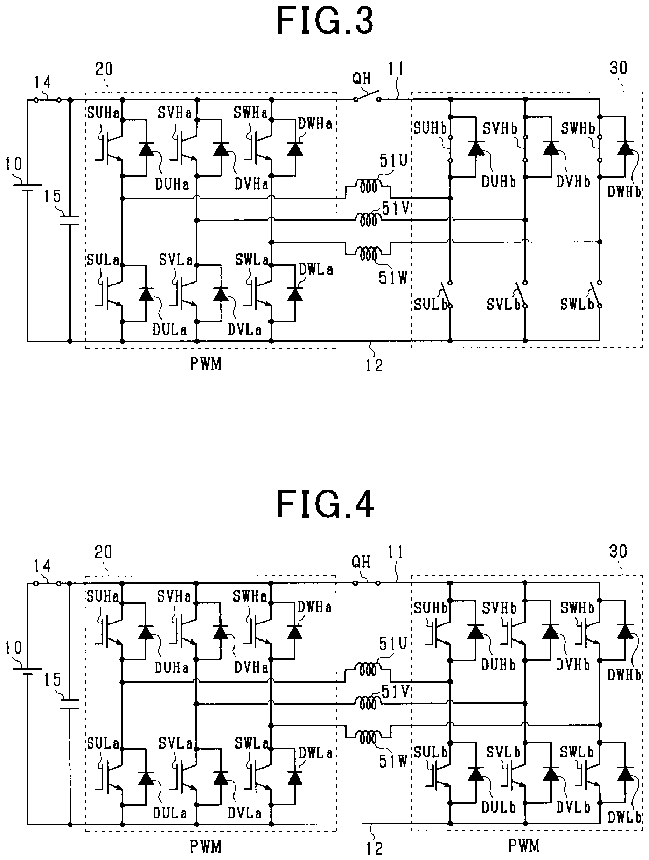

When the Y drive control is selected by the selection unit 85, the setting unit 86 performs the Y drive control in which, as shown in FIG. 3, the changeover switch QH is turned off and the switches SUHa to SWLa of the first inverter 20 are PWM-driven. Moreover, in the Y drive control, the setting unit 86 keeps the upper-arm switches SUHb, SVHb and SWHb of the second inverter 30 in an ON state and keeps the lower-arm switches SULb, SVLb and SWLb of the second inverter 30 in an OFF state. Consequently, the U-phase, V-phase and W-phase windings 51U, 51V and 51W are star-connected via the second inverter 30.

The setting unit 86 generates drive signals for the switches SUHa to SWLa of the first inverter 20 based on a comparison in magnitude between the U-phase, V-phase and W-phase normalized command values Dutyu, Dutyv and Dutyw and a carrier signal Sgc. In the present embodiment, the carrier signal Sgc is a triangular wave signal having equal increasing and decreasing rates. Moreover, the carrier signal Sgc has its maximum value set to 1, its minimum value set to 0, and its variation center value set to 0.5.

Taking the U phase as an example, as shown in FIG. 5, the setting unit 86 generates a U-phase PWM signal GU* which has a logical H when the U-phase normalized command value Dutyu is greater than the carrier signal Sgc, and has a logical L when the U-phase normalized command value Dutyu is less than the carrier signal Sgc. Further, the setting unit 86 generates a logic-inverted signal of the U-phase PWM signal GU*.

The setting unit 86 generates, as the drive signal GUH for the U-phase first upper-arm switch SUHa, a signal by delaying the switching timing of the U-phase PWM signal GU* to the logical H by a dead time DT. Moreover, the setting unit 86 generates, as the drive signal GUL for the U-phase first lower-arm switch SULa, a signal by delaying the switching timing of the logic-inverted signal to the logical H by the dead time DT.

When the H drive control is selected by the selection unit 85, the setting unit 86 performs the H drive control in which, as shown in FIG. 4, the changeover switch QH is turned on, the switches SUHa to SWLa of the first inverter 20 are PWM-driven, and the switches SUHb to SWLb of the second inverter 30 are also PWM-driven.

Specifically, the setting unit 86 generates drive signals for the switches SUHa to SWLa of the first inverter 20 based on a comparison in magnitude between the U-phase, V-phase and W-phase normalized command values Dutyu, Dutyv and Dutyw and a first carrier signal Sg1, as in the case of performing the Y drive control. Moreover, the setting unit 86 generates drive signals for the switches SUHb to SWLb of the second inverter 30 based on a comparison in magnitude between the U-phase, V-phase and W-phase normalized command values Dutyu, Dutyv and Dutyw and a second carrier signal Sg2, as in the case of performing the Y drive control. In the present embodiment, each of the first and second carrier signals Sg1 and Sg2 is a triangular wave signal having equal increasing and decreasing rates. The frequency, amplitude and variation center value of the second carrier signal Sg2 are respectively equal to the frequency, amplitude and variation center value of the first carrier signal Sg1. Moreover, each of the first and second carrier signals Sg1 and Sg2 has its maximum value set to 1, its minimum value set to 0, and its variation center value set to 0.5. Furthermore, the difference in phase between the first carrier signal Sg1 and the second carrier signal Sg2 is set to 180°. In addition, both the frequencies of the carrier signals Sg1 and Sg2 used in the H drive control are equal to the frequency of the carrier signal Sgc used in the Y drive control.

A switch control unit 87 controls charge/discharge currents of the gates of the switches SUHa to SWLa and SUHb to SWLb of the first and second inverters 20 and 30 based on the generated drive signals. Consequently, the on/off control of the switches SUHa to SWLa and SUHb to SWLb of the first and second inverters 20 and 30 is performed in accordance with the drive signals.

In the H drive control, the switching patterns of the switches of the first and second inverters 20 and 30, whose switching is controlled in accordance with the drive signals, are offset in phase by 120° in electrical angle between the U, V and W phases. Moreover, in the Y drive control, the switching patterns of the switches of the first inverter 20, whose switching is controlled in accordance with the drive signals, are also offset in phase by 120° in electrical angle between the U, V and W phases.

When torque control of the rotating electric machine 40 is performed, if the output torque of the rotating electric machine 40 becomes equal to the load torque acting on the rotor 41, the rotation of the rotor 41 may stop or the rotor 41 may rotate at an extremely low speed. In this case, the electrical angle may stop changing or change in the electrical angle may become small, thus causing electric current to concentrate in the armature winding of one of the U, V and W phases. As a result, the switches that constitute the inverters may be brought into an overheated state, thereby lowering the reliability of the inverters. Such a situation may occur, for example, when the drive wheels of the vehicle attempt to pass over a step, when the drive wheels attempt to run over a wheel stopper in a parking space, or when the vehicle starts moving on a steep uphill slope. FIG. 6 illustrates an example in which electric current concentrates in the W-phase armature winding 51W during the execution of the Y drive control.

In the present embodiment, the control apparatus 70 performs overheat protection control for preventing occurrence of the above-described overheated state. Specifically, as shown in FIG. 2, the control apparatus 70 includes a lock determination unit 88. The lock determination unit 88 determines whether the rotor 41 is in a locked state which is a rotation-stopped state or an extremely low-speed rotation state. In the present embodiment, the lock determination unit 88 determines whether the rotor 41 is in the locked state based on the rotational speed Nr and the command torque Trq*. Moreover, when it is determined that the rotor 41 is in the locked state, the setting unit 86 of the control apparatus 70 performs the overheat protection control.

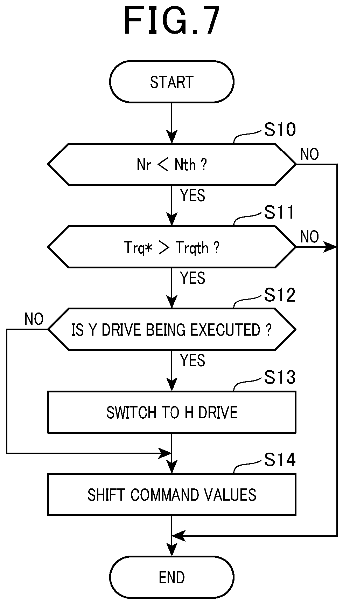

FIG. 7 shows a flowchart of an overheat protection control process executed during the execution of the torque control of the rotating electric machine 40. In addition, the process shown in FIG. 7 is repeatedly executed by the processor 71 of the control apparatus 70 at a predetermined control cycle.

In steps S10 and S11, the lock determination unit 88 determines whether the rotor 41 is in the locked state. Specifically, in step S10, it is determined whether the rotational speed Nr is lower than a speed threshold Nth. The speed threshold Nth is set to a value with which it is possible to determine whether the rotor 41 is in a rotation-stopped state or in an extremely low-speed rotation state where the rotor 41 rotates in a state close to the rotation-stopped state. For example, the speed threshold Nth may be set to a value greater than or equal to 10 rpm and less than or equal to 15 rpm, a value greater than or equal to 5 rpm and less than or equal to 10 rpm, a value greater than or equal to 2 rpm and less than or equal to 5 rpm, or 0 rpm. In addition, the lock determination unit 88 may use, for example, the electrical angular speed ωr of the rotor 41, which is calculated based on the electrical angle θr, as the value to be compared with the speed threshold Nth.

If an affirmative determination is made in step S10, the process proceeds to step S11. In step S11, it is determined whether the command torque Trq* is higher than a torque threshold Trqth. The torque threshold Trqth may be set to, for example, the continuous allowable torque of the rotating electric machine 40.

If a negative determination is made in either step S10 or step S11, normal torque control is performed without executing the overheat protection control. On the other hand, if an affirmative determination is made in step S11, it is determined that the rotor 41 is in the locked state; then, the process proceeds to step S12. In step S12, it is determined whether the Y drive control is being executed.

If it is determined in step S12 that the Y drive control is being executed, the process proceeds to step S13. In step S13, the drive state of the control system 100 is forcibly switched from the Y drive control to the H drive control. Consequently, PWM drive is initiated in the second inverter 30 as well, thereby preventing the occurrence of a situation where electric current concentrates in the upper arm of the second inverter 30.

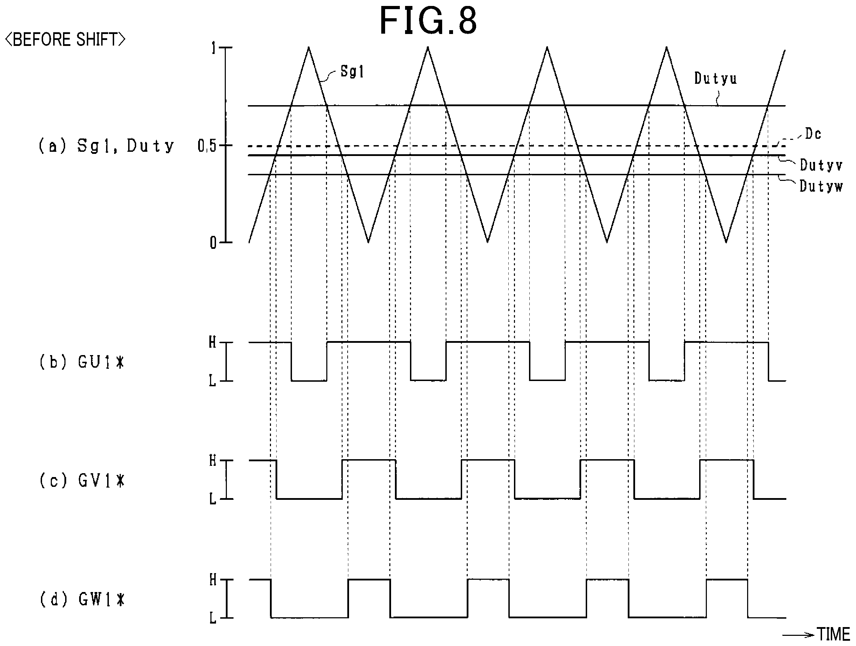

If the process in step S13 is completed, or if it is determined in step S12 that the H drive control is being executed, the process proceeds to step S14. In step S14, the overheat protection control is performed. Hereinafter, the overheat protection control will be described with reference to FIGS. 8 to 16.

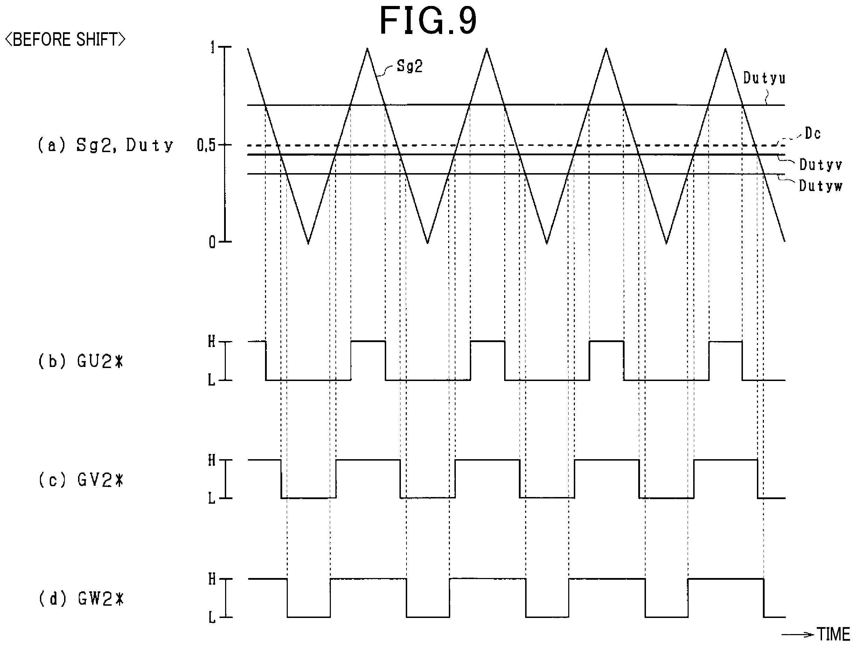

FIGS. 8 and 9 illustrate the temporal changes of waveforms when the rotor 41 is in a rotation-stopped state and the overheat protection control has not been executed. Specifically, in FIG. 8, (a) illustrates the temporal changes of the first carrier signal Sg1 and the U-phase, V-phase and W-phase normalized command values Dutyu, Dutyv and Dutyw; and (b), (c) and (d) respectively illustrate the temporal changes of the U-phase, V-phase and W-phase PWM signals GU1*, GV1* and GW1* in the first inverter 20. In FIG. 9, (a) illustrates the temporal changes of the second carrier signal Sg2 and the U-phase, V-phase and W-phase normalized command values Dutyu, Dutyv and Dutyw; and (b), (c) and (d) respectively illustrate the temporal changes of the U-phase, V-phase and W-phase PWM signals GU2*, GV2* and GW2* in the second inverter 30. In addition, in FIGS. 8 and 9, Dc designates the variation center values of the carrier signals Sg1 and Sg2.

In the present embodiment, as the overheat protection control, control of reducing the U-phase, V-phase and W-phase normalized command values Dutyu, Dutyv and Dutyw by a predetermined command value ΔD is performed. The predetermined command value ΔD is set to a value such that the minimum value among the U-phase, V-phase and W-phase normalized command values Dutyu, Dutyv and Dutyw does not become less than 0. For example, the predetermined command value ΔD may be set to a value greater than or equal to 0.1 and less than or equal to 0.4, a value greater than or equal to 0.1 and less than or equal to 0.3, a value greater than or equal to 0.15 and less than or equal to 0.3, or a value greater than or equal to 0.2 and less than or equal to 0.3. More particularly, in the present embodiment, the predetermined command value ΔD is set to 0.25. When the overheat protection control is executed, the U-phase, V-phase and W-phase normalized command values used for generation of the drive signals respectively become (Dutyu - ΔD), (Dutyv - ΔD) and (Dutyw - ΔD). In other words, the normalized command values are shifted with respect to the variation center values Dc of the first and second carrier signals Sg1 and Sg2.

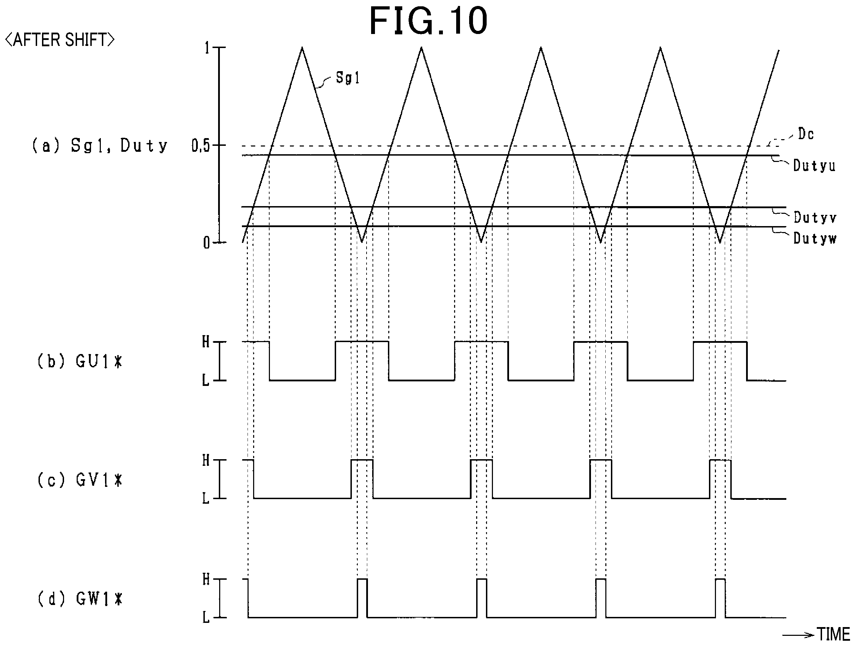

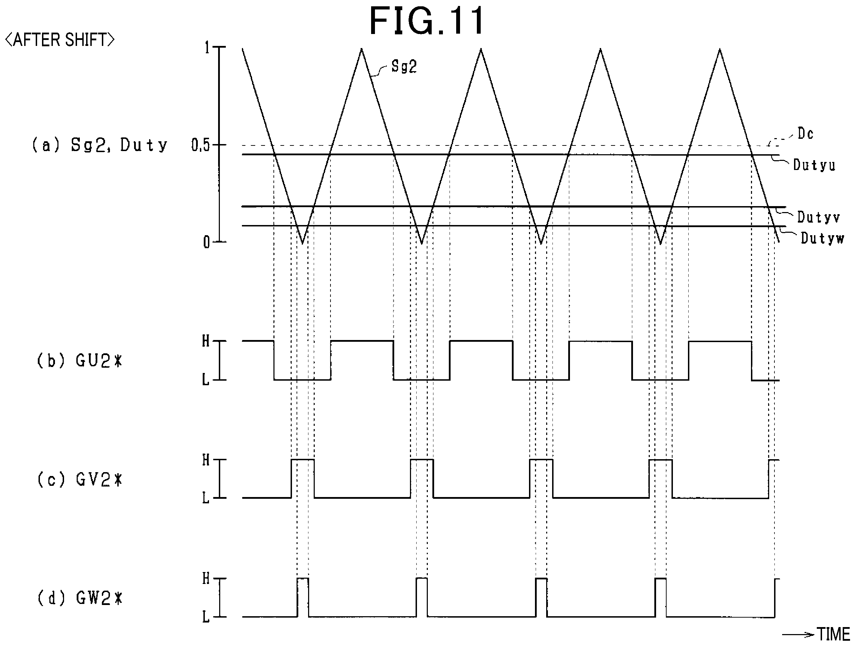

FIGS. 10 and 11 illustrate the temporal changes of waveforms after the normalized command values are shifted by the overheat protection control. In addition, FIG. 10 (a)-(d) and FIG. 11 (a)-(d) respectively correspond to FIG. 8 (a)-(d) and FIG. 9 (a)-(d).

In the present embodiment, as the overheat protection control, control is performed in which a process of reducing the U-phase, V-phase and W-phase normalized command values Dutyu, Dutyv and Dutyw by the predetermined command value ΔD and a process of restoring the reduced U-phase, V-phase and W-phase normalized command values Dutyu, Dutyv and Dutyw to their original values are alternately switched. This control is for switching electric current flow paths in the inverters 20 and 30 when the rotor 41 is in the locked state. Hereinafter, explanation will be given taking the V phase as an example.

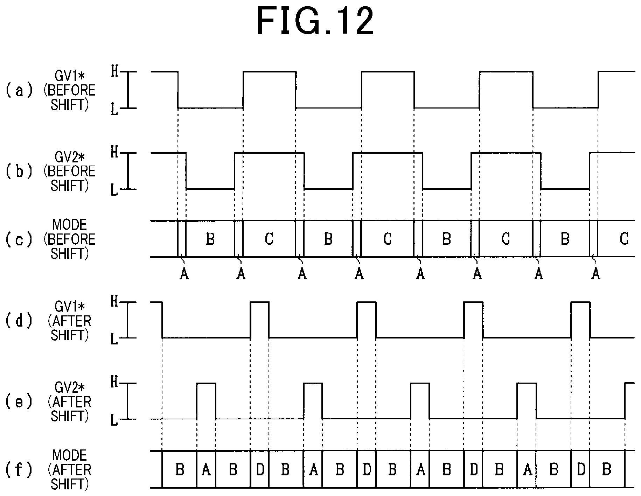

FIG. 12 illustrates the temporal changes of the V-phase PWM signals GV1* and GV2* shown in FIGS. 8 to 11. Specifically, in FIG. 12, (a) and (b) respectively illustrate the temporal changes of the V-phase PWM signals GV1* and GV2* before the normalized command values are shifted by the predetermined command value ΔD; and (d) and (e) respectively illustrate the temporal changes of the V-phase PWM signals GV1* and GV2* after the normalized command values are shifted by the predetermined command value ΔD.

Moreover, in FIG. 12, (c) illustrates electric current flow modes realized by the V-phase PWM signals GV1* and GV2* shown in (a) and (b). It should be noted that in FIG. 12, for the sake of convenience, it is assumed that the dead time DT is 0.

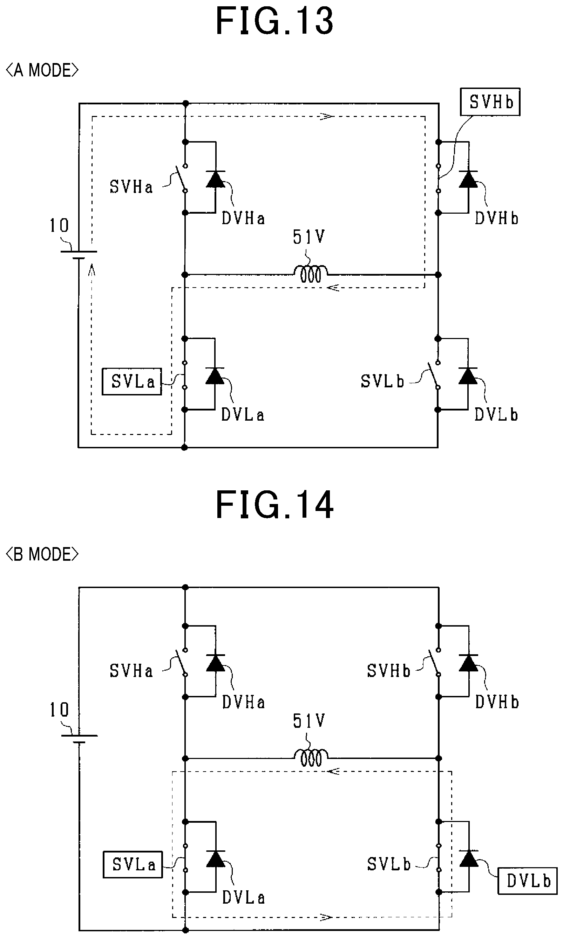

When the logic of the V-phase PWM signal GV1* is L and the logic of the V-phase PWM signal GV2* is H, an A mode as shown in FIG. 13 is realized. In the A mode, electric current flows through the second upper-arm switch SVHb and the first lower-arm switch SVLa. It should be noted that in FIG. 13 and subsequent FIGS. 14 to 16, there is illustrated a case where the direction of the phase current flowing through the armature winding 51V is negative.

When both the logics of the V-phase PWM signals GV1* and GV2* are L, a B mode as shown in FIG. 14 is realized. In the B mode, electric current flows through the second lower-arm diode DVLb and the first lower-arm switch SVLa.

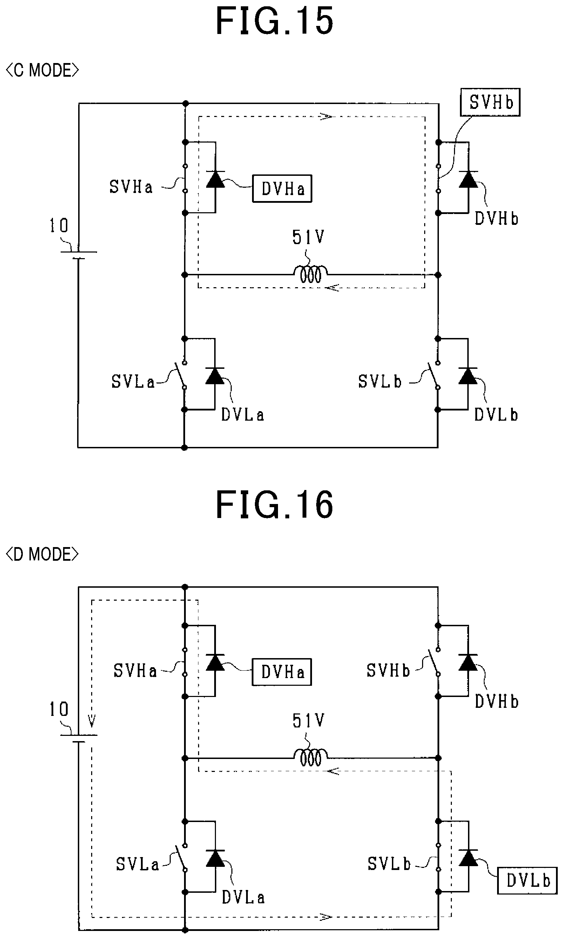

When both the logics of the V-phase PWM signals GV1* and GV2* are H, a C mode as shown in FIG. 15 is realized. In the C mode, electric current flows through the first upper-arm diode DVHa and the second upper-arm switch SVHb.

In the example shown in FIG. 12, before the normalized command values are shifted, a switching cycle (i.e., a cycle of the carrier signals) of "A → B → A → C" is repeated.

On the other hand, in FIG. 12, (f) illustrates electric current flow modes realized by the V-phase PWM signals GV1* and GV2* shown in (d) and (e).

In the example shown in FIG. 12, after the normalized command values are shifted, a switching cycle of "B → A → B → D" is repeated. The D mode is a mode as shown in FIG. 16, which is realized when the logic of the V-phase PWM signal GV1* is H and the logic of the V-phase PWM signal GV2* is L. In the D mode, electric current flows through the first upper-arm diode DVHa and the second lower-arm diode DVLb.

In the example shown in FIG. 12, by shifting the normalized command values, the C mode disappears and the D mode appears. In this case, an element included in the electric current flow path is changed from the second upper-arm switch SVHb to the second lower-arm diode DVLb.

Therefore, by shifting the normalized command values when the rotor 41 is in the locked state, heat-generating elements in the inverters 20 and 30 can be switched, thereby preventing occurrence of an overheated state of the inverters 20 and 30.

The relative relationships between the U-phase, V-phase and W-phase normalized command values Dutyu, Dutyv and Dutyw are maintained before and after the shift. Consequently, it becomes possible to suppress changes in the line-to-line voltages of the armature windings before and after the shift, thereby suppressing change in the torque of the rotating electric machine 40 before and after the shift.

In addition, the control apparatus 70 may switch between the process of reducing the normalized command values by the predetermined command value ΔD and the process of restoring the reduced normalized command values to their original values at predetermined time intervals. Alternatively, the control apparatus 70 may switch between the process of reducing the normalized command values by the predetermined command value ΔD and the process of restoring the reduced normalized command values to their original values based on the temperatures of the first and second inverters 20 and 30 detected by the temperature sensor 63.

### [Second Embodiment]

Hereinafter, a second embodiment will be described with reference to the drawings, focusing on the differences thereof from the first embodiment. In the second embodiment, the control apparatus 70 performs overheat protection control using zero-phase current.

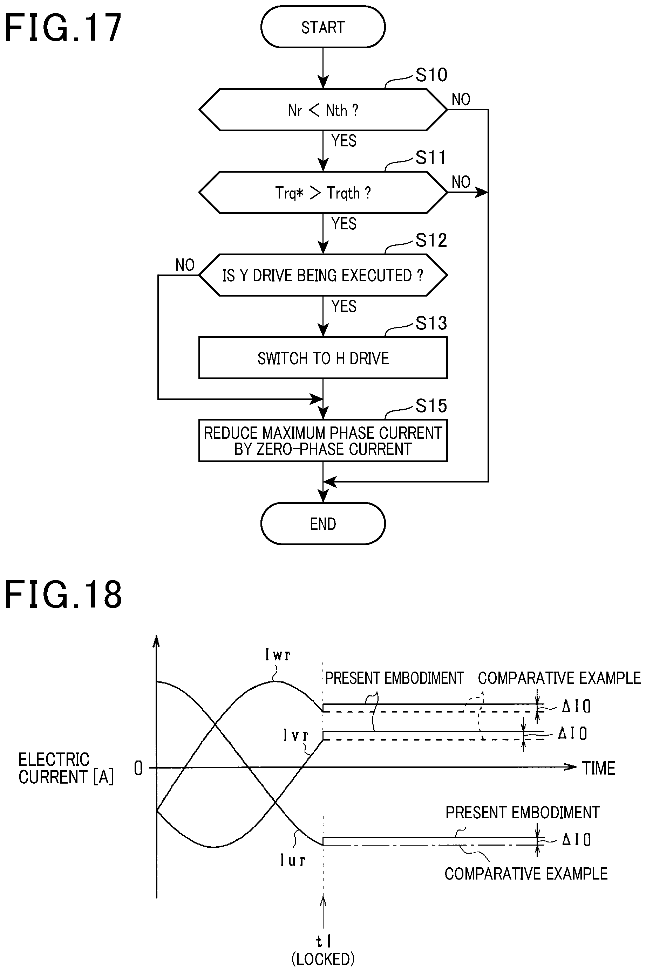

FIG. 17 shows a flowchart of an overheat protection control process executed during the execution of the torque control of the rotating electric machine 40. In addition, the process shown in FIG. 17 is repeatedly executed by the processor 71 of the control apparatus 70 at a predetermined control cycle.

If the process in step S13 is completed, or if it is determined in step S12 that the H drive control is being executed, the process proceeds to step S15. In step S15, the setting unit 86 executes the overheat protection control. Specifically, H drive control satisfying both a first requirement and a second requirement is executed. The first requirement is to cause zero-phase current ΔI0 to flow through the armature windings 51U, 51V and 51W of the respective phases so as to reduce the phase current having the maximum magnitude among the U-phase, V-phase and W-phase currents detected by the current sensor 60. In the example shown in FIG. 18, at a time instant t1, it is determined that the rotor 41 is in the locked state; and among the U-phase, V-phase and W-phase currents Iur, Ivr and Iwr, the magnitude of the U-phase current Iur is highest. In addition, in FIG. 18, from the time instant t1 onward, solid lines indicate the temporal changes of the phase currents in the case of executing the overheat protection control; and dashed lines indicate the temporal changes of the phase currents in a comparative example where no overheat protection control is executed.

The second requirement is to cause the zero-phase current ΔI0 to flow through the armature windings 51U, 51V and 51W of the respective phases so that at least one of the magnitudes of the phase currents other than the phase current whose magnitude is reduced by the first requirement among the U-phase, V-phase and W-phase currents Iur, Ivr and Iwr becomes lower than or equal to the magnitude of the phase current whose magnitude is reduced by the first requirement. In the example shown in FIG. 18, the magnitude of the W-phase current Iwr in the case of executing the overheat protection control becomes lower than or equal to the magnitude of the U-phase current Iur in the case of executing the overheat protection control.

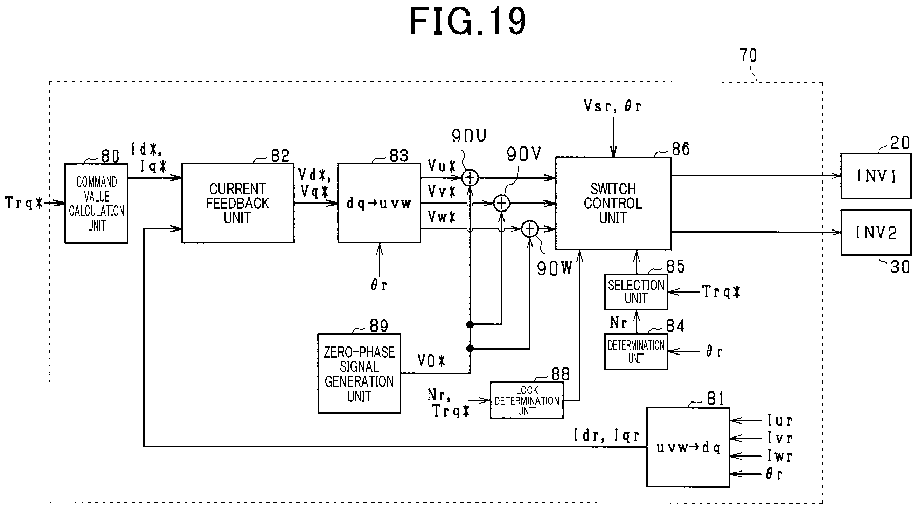

FIG. 19 is an exemplary block diagram for executing the overheat protection control according to the present embodiment.

A zero-phase signal generation unit 89 generates a zero-phase signal V0* for controlling zero-phase current flowing through the U-phase, V-phase and W-phase windings 51U, 51V and 51W to a target value, and outputs the generated zero-phase signal V0* to U-phase, V-phase and W-phase superimposition units 90U, 90V and 90W. The zero-phase signal V0* is a DC signal for causing the zero-phase current ΔI0 shown in FIG. 18 to flow through the armature windings 51U, 51V and 51W of the respective phases.

The U-phase, V-phase and W-phase superimposition units 90U, 90V and 90W respectively add the common zero-phase signal V0* to the U-phase, V-phase and W-phase voltage command values Vu*, Vv* and Vw*, and output the addition results to the switch control unit 87. The switch control unit 87 uses (Vu* + V0*), (Vv* + V0*) and (Vw* + V0*) for generation of drive signals in the H drive control.

According to the present embodiment described above, when the rotor 41 is in the locked state, it is possible to prevent the first inverter 20 and the second inverter 30 from entering an overheated state.

### [Third Embodiment]

Hereinafter, a third embodiment will be described with reference to the drawings, focusing on the differences thereof from the first embodiment. In the third embodiment, the control apparatus 70 performs overheat protection control of the changeover switch QH.

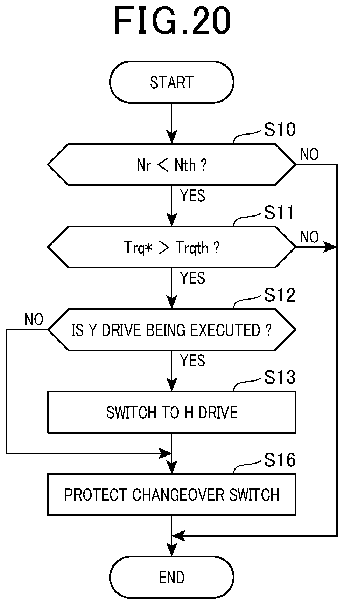

FIG. 20 shows a flowchart of an overheat protection control process executed during the execution of the torque control of the rotating electric machine 40. In addition, the process shown in FIG. 20 is repeatedly executed by the processor 71 of the control apparatus 70 at a predetermined control cycle.

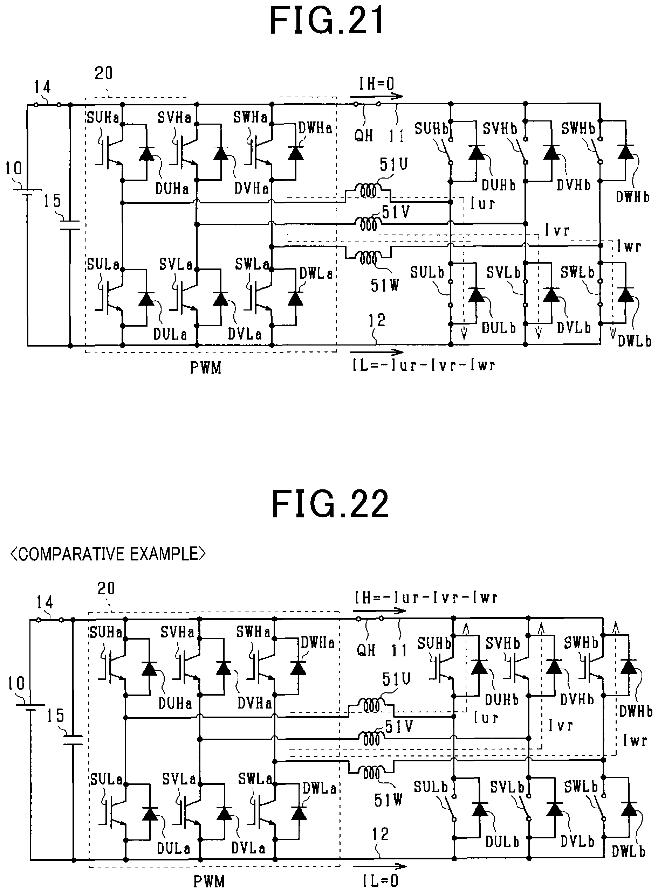

If the process in step S13 is completed, or if it is determined in step S12 that the H drive control is being executed, the process proceeds to step S16. In step S16, the setting unit 86 executes the overheat protection control. Specifically, the setting unit 86 keeps at least one of the second lower-arm switches SULb, SVLb and SWLb of the second inverter 30 in an ON state while continuing to PWM-drive the first inverter 20. More particularly, in the present embodiment, as shown in FIG. 21, the setting unit 86 keeps all of the three second lower-arm switches SULb, SVLb and SWLb in an ON state. Consequently, no electric current flows through the changeover switch QH. In addition, in FIG. 21, IH designates electric current flowing through the positive-electrode-side bus 11; and IL designates electric current flowing through the negative-electrode-side bus 12. During the H drive control in which the changeover switch QH is in an ON state, the following relationship is satisfied: Iur + Ivr + Iwr + IH + IL = 0.

FIG. 22 illustrates a comparative example in which all of the three second lower-arm switches SULb, SVLb and SWLb are kept in an OFF state. In this case, all of the three phase currents flow through the changeover switch QH.

According to the present embodiment described above, when the rotor 41 is in the locked state, it is possible to prevent the changeover switch QH from entering an overheated state.

### [Modifications of Third Embodiment]

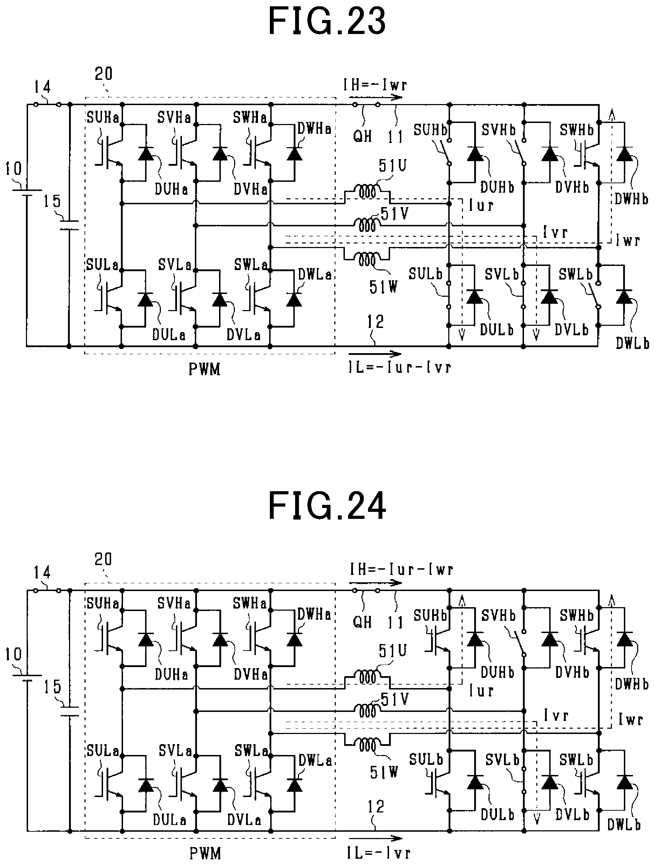

As shown in FIG. 23, the setting unit 86 may keep only two of the three second lower-arm switches SULb, SVLb and SWLb in an ON state.

Otherwise, as shown in FIG. 24, the setting unit 86 may keep only one of the three second lower-arm switches SULb, SVLb and SWLb in an ON state.

### [Fourth Embodiment]

Hereinafter, a fourth embodiment will be described with reference to the drawings, focusing on the differences thereof from the first embodiment. In the fourth embodiment, the contents of the overheat protection control are modified compared to those in the first embodiment.

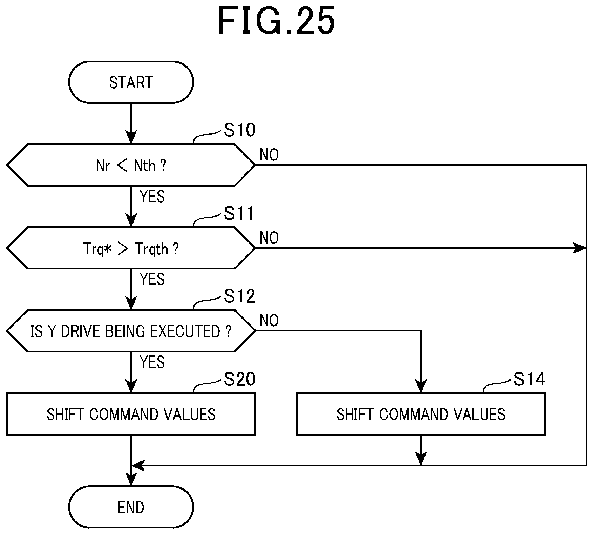

FIG. 25 shows a flowchart of an overheat protection control process executed during the execution of the torque control of the rotating electric machine 40. In addition, the process shown in FIG. 25 is repeatedly executed by the processor 71 of the control apparatus 70 at a predetermined control cycle.

If it is determined in step S12 that the Y drive control is being executed, the process proceeds to step S20. In step S20, the overheat protection control is performed. Specifically, as in the first embodiment, control is performed in which a process of reducing the U-phase, V-phase and W-phase normalized command values Dutyu, Dutyv and Dutyw by a predetermined command value ΔD and a process of restoring the reduced U-phase, V-phase and W-phase normalized command values Dutyu, Dutyv and Dutyw to their original values are alternately switched.

Consequently, heat-generating elements in the first inverter 20 can be switched, thereby preventing occurrence of an overheated state of the first inverter 20.

### [Fifth Embodiment]

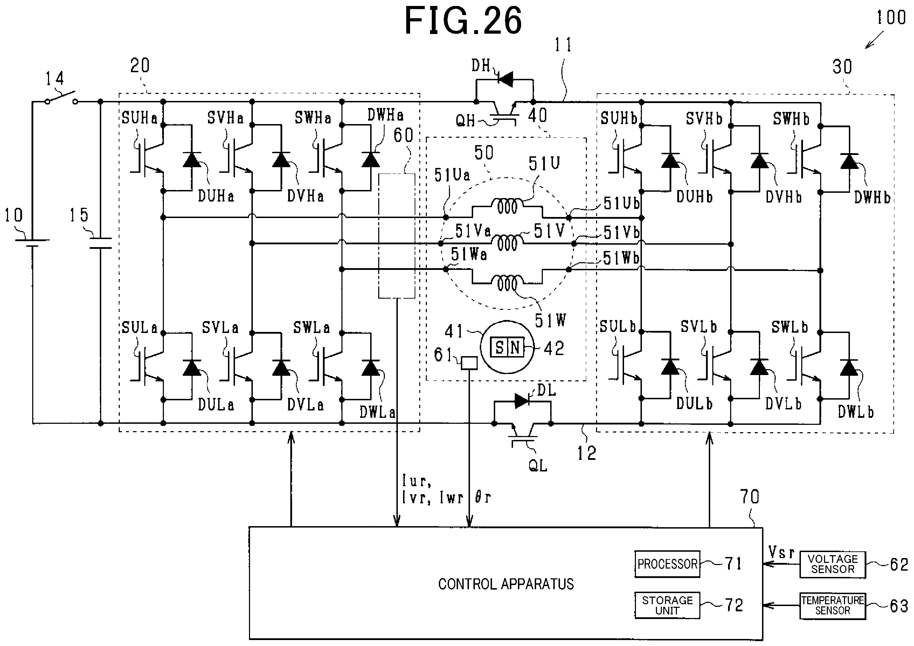

Hereinafter, a fifth embodiment will be described with reference to the drawings, focusing on the differences thereof from the fourth embodiment. In the fifth embodiment, as shown in FIG. 26, the control system 100 includes a second changeover switch QL in addition to the first changeover switch QH. The second changeover switch QL is provided in the negative-electrode-side bus 12 (corresponding to a "target bus"). The second changeover switch QL may be constituted of, for example, a semiconductor switching element or a mechanical relay. More particularly, in the present embodiment, the second changeover switch QL is constituted of an IGBT. Moreover, the second changeover switch QL has a freewheeling diode DL connected in antiparallel thereto. The second changeover switch QL has its collector connected to the second inverter 30 side and its emitter connected to the first inverter 20 side.

Upon being turned on, the second changeover switch QL electrically connects the emitters of the U-phase, V-phase and W-phase lower-arm switches SULa, SVLa and SWLa of the first inverter 20 with the emitters of the U-phase, V-phase and W-phase lower-arm switches SULb, SVLb and SWLb of the second inverter 30. On the other hand, upon being turned off, the second changeover switch QL electrically disconnects the emitters of the U-phase, V-phase and W-phase lower-arm switches SULa, SVLa and SWLa of the first inverter 20 from the emitters of the U-phase, V-phase and W-phase lower-arm switches SULb, SVLb and SWLb of the second inverter 30.

In the present embodiment, when the H drive control is selected, the control apparatus 70 turns on both the first changeover switch QH and the second changeover switch QL. On the other hand, when the Y drive control is selected, the control apparatus 70 turns off both the first changeover switch QH and the second changeover switch QL.

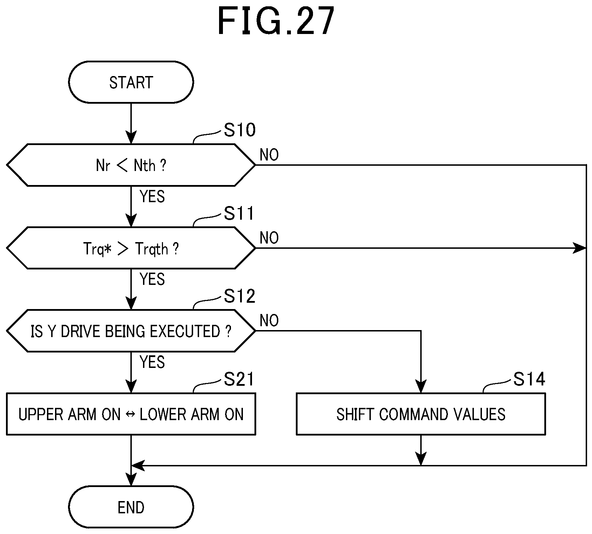

FIG. 27 shows a flowchart of an overheat protection control process executed during the execution of the torque control of the rotating electric machine 40. In addition, the process shown in FIG. 27 is repeatedly executed by the processor 71 of the control apparatus 70 at a predetermined control cycle.

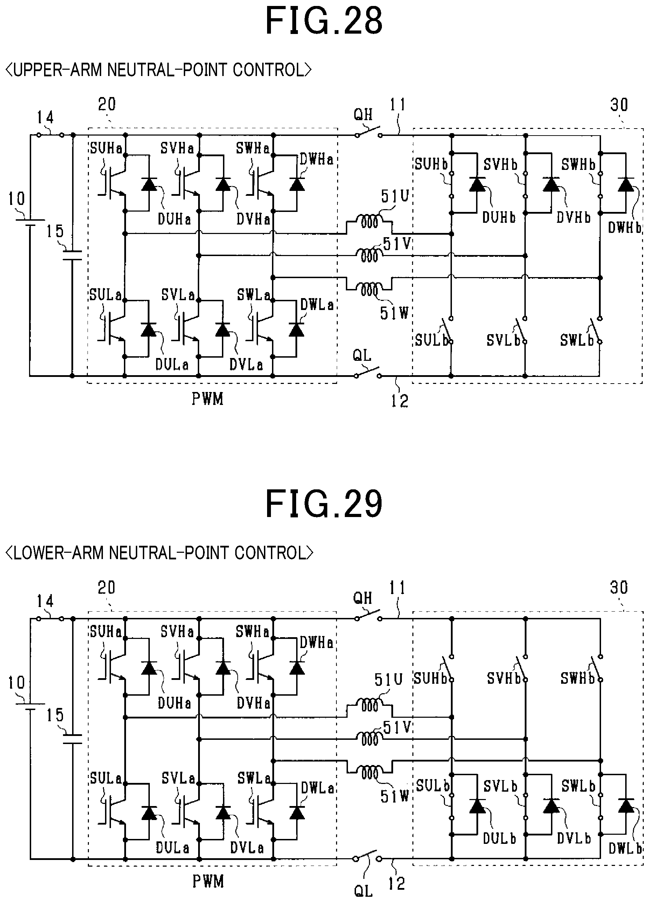

If it is determined in step S12 that the Y drive control is being executed, the process proceeds to step S21. In step S21, the overheat protection control is performed while continuing the Y drive control. Specifically, as the overheat protection control, upper-arm neutral-point control and lower-arm neutral-point control are alternately switched. The upper-arm neutral-point control is control shown in FIG. 28, and corresponds to the control shown in FIG. 3 described above. On the other hand, the lower-arm neutral-point control is control in which, as shown in FIG. 29, the upper-arm switches SUHb, SVHb and SWHb of the second inverter 30 are kept in an OFF state and the lower-arm switches SULb, SVLb and SWLb of the second inverter 30 are kept in an ON state. In this case, the lower arm of the second inverter 30 functions as a neutral point.

In addition, the control apparatus 70 may alternately switch between the upper-arm neutral-point control and the lower-arm neutral-point control at predetermined time intervals.

According to the present embodiment described above, when the rotor 41 is in the locked state during execution of the Y drive control, it is possible to prevent the second inverter 30 from entering an overheated state.

### [Modification of Fifth Embodiment]

In step S21, the process in step S20 of FIG. 25 described in the fourth embodiment may also be executed.

### [Sixth Embodiment]

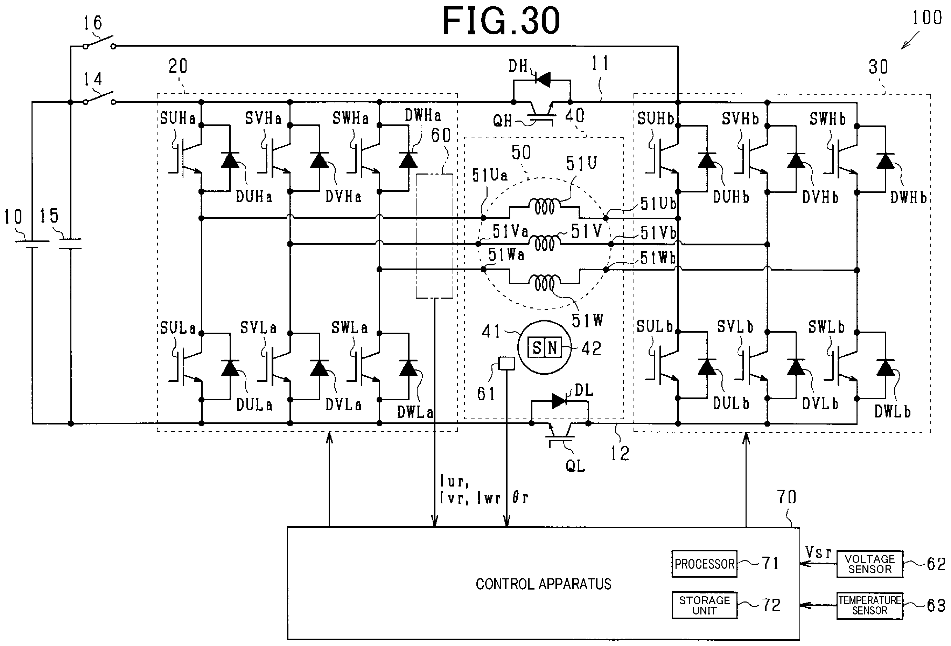

Hereinafter, a sixth embodiment will be described with reference to the drawings, focusing on the differences thereof from the fifth embodiment. In the sixth embodiment, as shown in FIG. 30, either the first inverter 20 or the second inverter 30 is selectively disconnected from the battery 10.

Specifically, the control system 100 includes a second power supply switch 16 in addition to the first power supply switch 14. The second power supply switch 16 may be constituted of, for example, a semiconductor switching element or a mechanical relay. The second power supply switch 16 connects the positive electrode terminal of the battery 10 with the collectors of the U-phase, V-phase and W-phase upper-arm switches SUHb, SVHb and SWHb of the second inverter 30. More specifically, upon being turned on, the second power supply switch 16 electrically connects the positive electrode terminal of the battery 10 with the collectors of the U-phase, V-phase and W-phase upper-arm switches SUHb, SVHb and SWHb of the second inverter 30. On the other hand, upon being turned off, the second power supply switch 16 electrically disconnects the positive electrode terminal of the battery 10 from the collectors of the U-phase, V-phase and W-phase upper-arm switches SUHb, SVHb and SWHb of the second inverter 30. In the present embodiment, the first power supply switch 14 and the second power supply switch 16 correspond to a "connection switching unit".

In addition, in the present embodiment, the capacitor 15 is connected in parallel with the battery 10. Moreover, when the H drive control is selected, the control apparatus 70 turns on the first power supply switch 14 and turns off the second power supply switch 16.

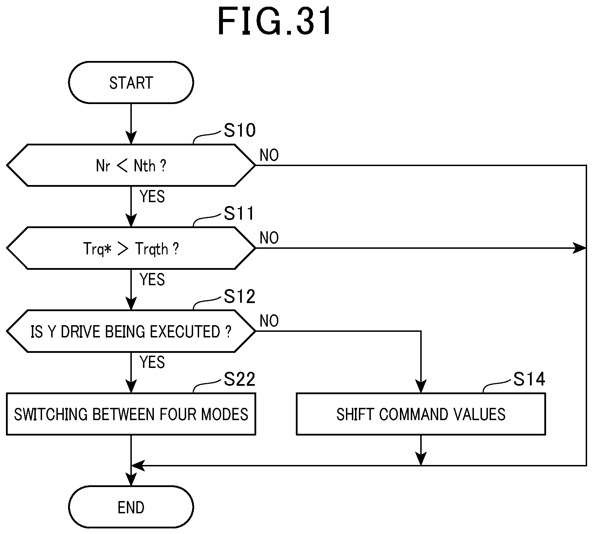

FIG. 31 shows a flowchart of an overheat protection control process executed during the execution of the torque control of the rotating electric machine 40. In addition, the process shown in FIG. 31 is repeatedly executed by the processor 71 of the control apparatus 70 at a predetermined control cycle.

If it is determined in step S12 that the Y drive control is being executed, the process proceeds to step S22. In step S22, the overheat protection control is performed. Specifically, as the overheat protection control, switching between first upper-arm neutral-point control, first lower-arm neutral-point control, second upper-arm neutral-point control and second lower-arm neutral-point control is performed.

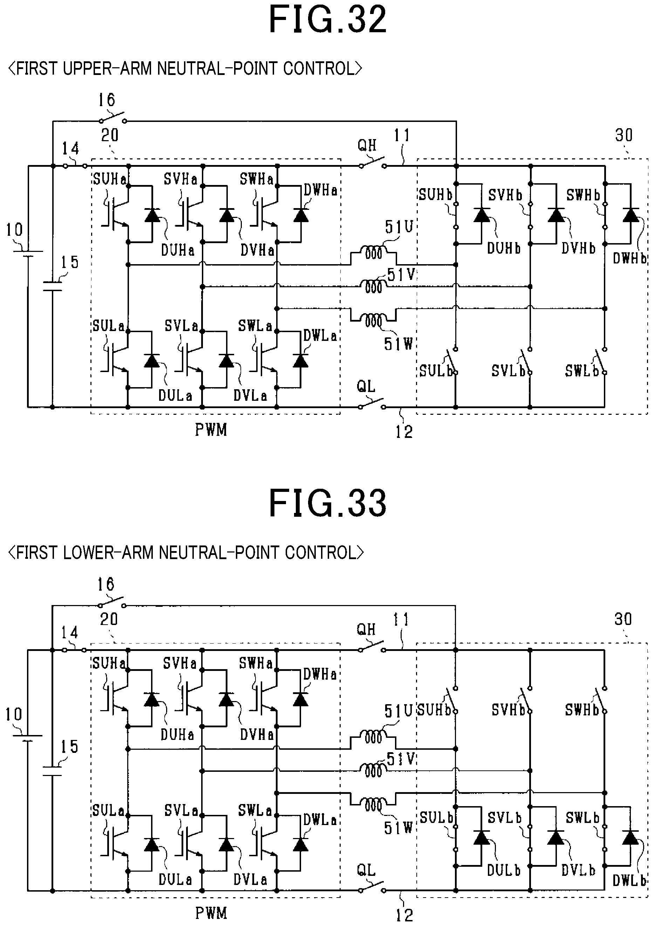

In the first upper-arm neutral-point control, as shown in FIG. 32, the first power supply switch 14 is kept in an ON state and the second power supply switch 16 is kept in an OFF state; and the switches SUHa to SWLa of the first inverter 20 are PWM-driven. Moreover, the upper-arm switches SUHb, SVHb and SWHb of the second inverter 30 are kept in an ON state and the lower-arm switches SULb, SVLb and SWLb of the second inverter 30 are kept in an OFF state.

With the first power supply switch 14 kept in the ON state and the second power supply switch 16 kept in the OFF state, a first mode is realized in which the battery 10 and the first inverter 20 are electrically connected with each other and the battery 10 and the second inverter 30 are electrically disconnected from each other.

In the first lower-arm neutral-point control, as shown in FIG. 33, the first power supply switch 14 is kept in the ON state and the second power supply switch 16 is kept in the OFF state; and the switches SUHa to SWLa of the first inverter 20 are PWM-driven. Moreover, the lower-arm switches SULb, SVLb and SWLb of the second inverter 30 are kept in an ON state and the upper-arm switches SUHb, SVHb and SWHb of the second inverter 30 are kept in an OFF state.

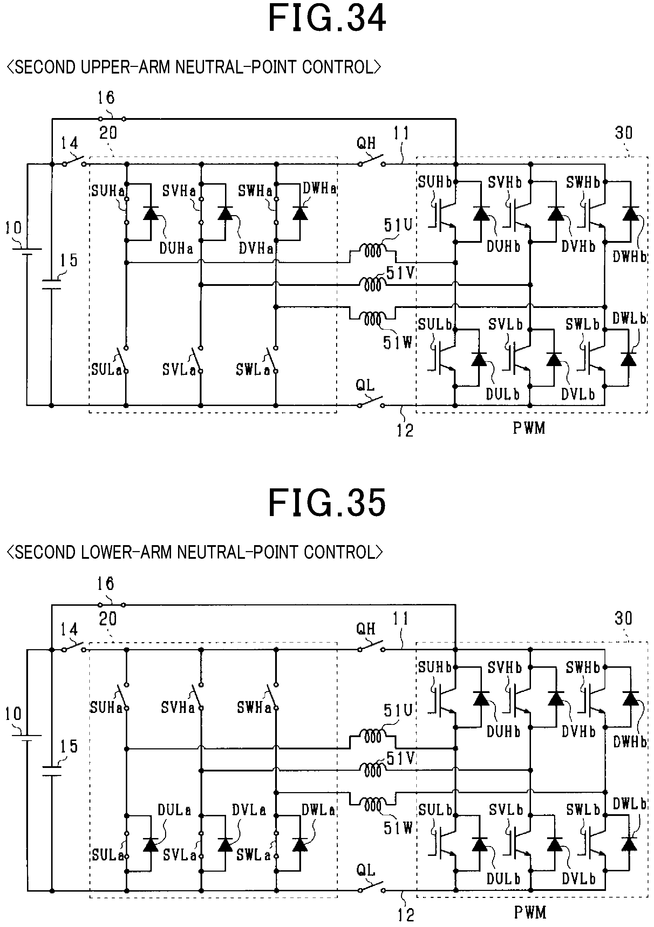

In the second upper-arm neutral-point control, as shown in FIG. 34, the first power supply switch 14 is kept in an OFF state and the second power supply switch 16 is kept in an ON state; and the switches SUHb to SWLb of the second inverter 30 are PWM-driven. Moreover, the upper-arm switches SUHa, SVHa and SWHa of the first inverter 20 are kept in an ON state and the lower-arm switches SULa, SVLa and SWLa of the first inverter 20 are kept in an OFF state.

With the first power supply switch 14 kept in the OFF state and the second power supply switch 16 kept in the ON state, a second mode is realized in which the battery 10 and the second inverter 30 are electrically connected with each other and the battery 10 and the first inverter 20 are electrically disconnected from each other.

In the second lower-arm neutral-point control, as shown in FIG. 35, the first power supply switch 14 is kept in the OFF state and the second power supply switch 16 is kept in the ON state; and the switches SUHb to SWLb of the second inverter 30 are PWM-driven. Moreover, the lower-arm switches SULa, SVLa and SWLa of the first inverter 20 are kept in an ON state and the upper-arm switches SUHa, SVHa and SWHa of the first inverter 20 are kept in an OFF state.

The control apparatus 70 may perform switching between the controls shown in FIGS. 32 to 35 by various methods. Hereinafter, examples of the switching methods will be described.

In a first example, the control apparatus 70 may sequentially switch the first upper-arm neutral-point control, the first lower-arm neutral-point control, the second upper-arm neutral-point control and the second lower-arm neutral-point control at a predetermined cycle. In this case, the predetermined cycle may be, for example, a predetermined period.

In a second example, the control apparatus 70 may first perform a process of alternately switching between the first upper-arm neutral-point control and the first lower-arm neutral-point control at a predetermined cycle. When it is determined that a temperature of the second inverter 30 (e.g., the highest temperature of the switches SUHb to SWLb of the second inverter 30) detected by the temperature sensor 63 exceeds a temperature threshold, the control apparatus 70 may then perform a process of alternately switching between the second upper-arm neutral-point control and the second lower-arm neutral-point control at a predetermined cycle.

Alternatively, the control apparatus 70 may first perform the process of alternately switching between the second upper-arm neutral-point control and the second lower-arm neutral-point control at a predetermined cycle. When it is determined that a temperature of the first inverter 20 (e.g., the highest temperature of the switches SUHa to SWLa of the first inverter 20) detected by the temperature sensor 63 exceeds a temperature threshold, the control apparatus 70 may then perform the process of alternately switching between the first upper-arm neutral-point control and the first lower-arm neutral-point control at a predetermined cycle.

According to the present embodiment described above, it is possible to prevent the first inverter 20 and the second inverter 30 from entering an overheated state.

### [Modification of Sixth Embodiment]

The overheat protection control during the H drive control described in the third embodiment may be applied to the circuit shown in FIG. 30. In this case, in addition to switch control in the second inverter 30 as shown in FIGS. 21, 23 and 24, switch control as shown in FIGS. 21, 23 and 24 may also be performed in the first inverter 20.

### [Other Embodiments]

The above-described embodiments may be modified and implemented as follows.

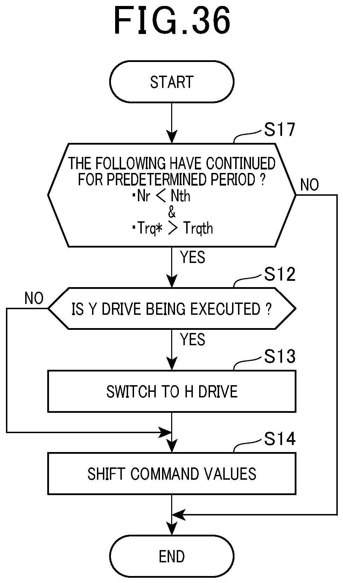

The process for determining whether the rotor 41 is in the locked state is not limited to the process shown in steps S10 and S11 in FIG. 7, but may alternatively be, for example, a process as shown in step S17 of FIG. 36. In step S17, the control apparatus 70 determines whether both a condition that the rotational speed Nr is lower than the speed threshold Nth and a condition that the command torque Trq* is higher than the torque threshold Trqth are continuously satisfied for a predetermined period.

Moreover, the control apparatus 70 may use, for the determination as to whether the rotor 41 is in the locked state, a detection value of the current sensor 60 instead of the command torque Trq*. For example, the control apparatus 70 may perform, instead of the process shown in step S11, a process of determining whether a detection value of the current sensor 60 is higher than a predetermined current value.

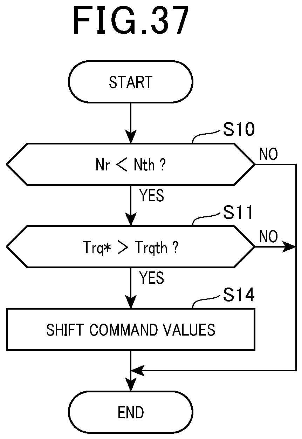

The control system may have no changeover switch provided therein. In this case, the control system is a system in which the Y drive control is not executed and the H drive state is executed. Moreover, in this case, the steps related to the Y drive control may be deleted from the flowcharts described above. For example, a flowchart as shown in FIG. 37 may be obtained by deleting the steps related to the Y drive control from the flowchart shown in FIG. 7.

The carrier signals are not limited to triangular wave signals, but may alternatively be, for example, sawtooth wave signals.

In the above-described embodiments, the control apparatus 70 may perform PWM driving based on spatial vector modulation instead of the PWM driving based on the comparison in magnitude between the command values and the carrier signals.

The DC power source is not limited to a battery, but may alternatively be, for example, a fuel cell.

The rotating electric machine is not limited to the permanent-magnet field synchronous machine, but may alternatively be, for example, an induction machine.

The number of phases of the rotating electric machine is not limited to three, but may alternatively be two, or four or more.

The semiconductor switching elements constituting the first inverter and the second inverter are not limited to IGBTs, but may alternatively be, for example, N-channel MOSFETs. In this case, each of the switches has its drain serving as a higher-potential-side terminal and its source serving as a lower-potential-side terminal. Moreover, in this case, each of the switches has a body diode.

The object in which the inverters, the rotating electric machine and the control apparatus are installed is not limited to a vehicle, but may alternatively be other mobile objects such as an aircraft or a ship. In the case of the object being an aircraft, the rotating electric machine serves as a flight power source of the aircraft. Otherwise, in the case of the object being a ship, the rotating electric machine serves as a navigation power source of the ship. Furthermore, the object in which the inverters, the rotating electric machine and the control apparatus are installed is not limited to mobile objects.

The control units and the control methods described in the present disclosure may be realized by a dedicated computer that includes a processor, which is programmed to perform one or more functions embodied by a computer program, and a memory. As an alternative, the control units and the control methods described in the present disclosure may be realized by a dedicated computer that includes a processor configured with one or more dedicated hardware logic circuits. As another alternative, the control units and the control methods described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible storage medium.

While the present disclosure has been described pursuant to the above-described embodiments, it should be appreciated that the present disclosure is not limited to these embodiments and the structures. Instead, the present disclosure encompasses various modifications and changes within equivalent ranges. In addition, various combinations and modes are also included in the category and the scope of technical idea of the present disclosure.

[DOCUMENT NAME] CLAIMS

## Claims

1. A control apparatus (70) applicable to a system,
the system comprising:
a rotating electric machine (40) having armature windings (51U to 51W) respectively of a plurality of phases;
a first inverter (20) having series connection units respectively of the plurality of phases, each of the series connection units consisting of a first upper-arm switch (SUHa to SWHa) and a first lower-arm switch (SULa to SWLa) that are connected in series with each other, each of the series connection units being connected in parallel with a DC power source (10);
a second inverter (30) having series connection units respectively of the plurality of phases, each of the series connection units consisting of a second upper-arm switch (SUHb to SWHb) and a second lower-arm switch (SULb to SWLb) that are connected in series with each other;
a positive-electrode-side bus (11) electrically connecting, for each of the plurality of phases, a higher-potential-side terminal of the first upper-arm switch of the phase and a higher-potential-side terminal of the second upper-arm switch of the phase; and
a negative-electrode-side bus (12) electrically connecting, for each of the plurality of phases, a lower-potential-side terminal of the first lower-arm switch of the phase and a lower-potential-side terminal of the second lower-arm switch of the phase,
wherein:
for each of the plurality of phases, both a lower-potential-side terminal of the first upper-arm switch of the phase and a higher-potential-side terminal of the first lower-arm switch of the phase are electrically connected with a first end of the armature winding of the phase; and
for each of the plurality of phases, both a lower-potential-side terminal of the second upper-arm switch of the phase and a higher-potential-side terminal of the second lower-arm switch of the phase are electrically connected with a second end of the armature winding of the phase,
the control apparatus comprising:
a setting unit (86) configured to set a control mode of the first upper-arm switches, the first lower-arm switches, the second upper-arm switches and the second lower-arm switches;
a switch control unit (87) configured to control the first upper-arm switches, the first lower-arm switches, the second upper-arm switches and the second lower-arm switches to the set control mode; and
a lock determination unit (88) configured to determine whether a rotor (41) of the rotating electric machine is in a locked state, which is a rotation-stopped state or an extremely low-speed rotation state, during control by the switch control unit,
wherein
the setting unit is further configured to execute, when it is determined by the lock determination unit that the rotor is in the locked state, overheat protection control for preventing occurrence of an overheated state in the system.

2. The control apparatus as set forth in Claim 1, wherein:
the system further comprises a changeover switch (QH, QL) provided in a target bus that is at least one of the positive-electrode-side bus and the negative-electrode-side bus;
the changeover switch electrically connects the first inverter and the second inverter via the target bus upon being turned on, and breaks the electrical connection of the first inverter and the second inverter via the target bus upon being turned off;
the setting unit sets the control mode to Y drive control or H drive control;
the Y drive control is control in which
the changeover switch is kept in an OFF state,
for each of the plurality of phases, the second upper-arm switch of the phase is kept in an ON state and the second lower-arm switch of the phase is kept in an OFF state, or the second lower-arm switch of the phase is kept in an ON state and the second upper-arm switch of the phase is kept in an OFF state, and
the first upper-arm switches and the first lower-arm switches are PWM-driven;
the H drive control is control in which the first upper-arm switches, the first lower-arm switches, the second upper-arm switches and the second lower-arm switches are PWM-driven; and
when it is determined by the lock determination unit that the rotor is in the locked state during execution of the Y drive control, the setting unit executes, as the overheat protection control, control of switching the control mode from the Y drive control to the H drive control.

3. The control apparatus as set forth in Claim 1 or 2, wherein:
the setting unit sets the control mode to H drive control in which the first upper-arm switches, the first lower-arm switches, the second upper-arm switches and the second lower-arm switches are PWM-driven;
the setting unit sets a control mode of the first upper-arm switches and the first lower-arm switches in the H drive control based on a comparison in magnitude between voltage command values (Dutyu, Dutyv, Dutyw) applied to the armature windings of the respective phases and a first carrier signal (Sg1);
the setting unit sets a control mode of the second upper-arm switches and the second lower-arm switches in the H drive control based on a comparison in magnitude between the voltage command values and a second carrier signal (Sg2) whose frequency, amplitude and variation center value are respectively equal to those of the first carrier signal and whose phase is offset from that of the first carrier signal by 180°; and
when it is determined by the lock determination unit that the rotor is in the locked state during execution of the H drive control, the setting unit executes, as the overheat protection control, control of switching between a process of shifting the voltage command values with respect to the variation center values of the first and second carrier signals and a process of restoring the shifted voltage command values to their original values.

4. The control apparatus as set forth in Claim 1 or 2, wherein:
the setting unit sets the control mode to H drive control in which the first upper-arm switches, the first lower-arm switches, the second upper-arm switches and the second lower-arm switches are PWM-driven; and
when it is determined by the lock determination unit that the rotor is in the locked state during execution of the H drive control, the setting unit executes, as the overheat protection control, the H drive control in which zero-phase current is caused to flow through the armature windings of the respective phases so as to reduce, of electric currents flowing respectively through the armature windings of the respective phases, the electric current having a maximum magnitude.

5. The control apparatus as set forth in Claim 2, wherein:
the changeover switch (QH) is provided in the positive-electrode-side bus;
the setting unit sets the control mode to the H drive control in which the first upper-arm switches, the first lower-arm switches, the second upper-arm switches and the second lower-arm switches are PWM-driven; and
when it is determined by the lock determination unit that the rotor is in the locked state during execution of the H drive control, the setting unit executes, as the overheat protection control, control of keeping at least one of the second lower-arm switches in an ON state and keeping at least one of the second upper-arm switches, which is connected in series with the at least one of the second lower-arm switches kept in the ON state, in an OFF state.

6. The control apparatus as set forth in Claim 1, wherein:
the system further comprises a changeover switch (QH, QL) provided in a target bus that is at least one of the positive-electrode-side bus and the negative-electrode-side bus;
the changeover switch electrically connects the first inverter and the second inverter via the target bus upon being turned on, and breaks the electrical connection of the first inverter and the second inverter via the target bus upon being turned off;
the setting unit sets the control mode to Y drive control;
the Y drive control is control in which
the changeover switch is kept in an OFF state,
for each of the plurality of phases, the second upper-arm switch of the phase is kept in an ON state and the second lower-arm switch of the phase is kept in an OFF state, or the second lower-arm switch of the phase is kept in an ON state and the second upper-arm switch of the phase is kept in an OFF state, and
the first upper-arm switches and the first lower-arm switches are PWM-driven;
the setting unit sets a control mode of the first upper-arm switches and the first lower-arm switches in the Y drive control based on a comparison in magnitude between voltage command values (Dutyu, Dutyv, Dutyw) applied to the armature windings of the respective phases and a carrier signal (Sgc); and
when it is determined by the lock determination unit that the rotor is in the locked state during execution of the Y drive control, the setting unit executes, as the overheat protection control, control of switching between a process of shifting the voltage command values with respect to a variation center value of the carrier signal and a process of restoring the shifted voltage command values to their original values.

7. The control apparatus as set forth in Claim 1, wherein:
the system further comprises a changeover switch (QH, QL) provided in a target bus that is at least one of the positive-electrode-side bus and the negative-electrode-side bus;
the changeover switch electrically connects the first inverter and the second inverter via the target bus upon being turned on, and breaks the electrical connection of the first inverter and the second inverter via the target bus upon being turned off;
the setting unit sets the control mode to Y drive control;
the Y drive control is control in which
the changeover switch is kept in an OFF state,
for each of the plurality of phases, the second upper-arm switch of the phase is kept in an ON state and the second lower-arm switch of the phase is kept in an OFF state, or the second lower-arm switch of the phase is kept in an ON state and the second upper-arm switch of the phase is kept in an OFF state, and
the first upper-arm switches and the first lower-arm switches are PWM-driven;
when it is determined by the lock determination unit that the rotor is in the locked state during execution of the Y drive control, the setting unit performs, as the overheat protection control, switching between upper-arm neutral-point control and lower-arm neutral-point control;
the upper-arm neutral-point control is control in which
the changeover switch is kept in the OFF state,
for each of the plurality of phases, the second upper-arm switch of the phase is kept in the ON state and the second lower-arm switch of the phase is kept in the OFF state, and
the first upper-arm switches and the first lower-arm switches are PWM-driven; and
the lower-arm neutral-point control is control in which
the changeover switch is kept in the OFF state,
for each of the plurality of phases, the second lower-arm switch of the phase is kept in the ON state and the second upper-arm switch of the phase is kept in the OFF state, and
the first upper-arm switches and the first lower-arm switches are PWM-driven.

8. The control apparatus as set forth in Claim 7, further comprising a connection switching unit (14, 16) configured to switch a connection mode between:
a first mode in which the DC power source and the first inverter are electrically connected with each other and the DC power source and the second inverter are electrically disconnected from each other; and
a second mode in which the DC power source and the second inverter are electrically connected with each other and the DC power source and the first inverter are electrically disconnected from each other,
wherein:
the upper-arm neutral-point control is first upper-arm neutral-point control executed when the connection mode is set by the connection switching unit to the first mode;
the lower-arm neutral-point control is first lower-arm neutral-point control executed when the connection mode is set by the connection switching unit to the first mode;
when it is determined by the lock determination unit that the rotor is in the locked state during execution of the Y drive control, the setting unit performs, as the overheat protection control, switching between the first upper-arm neutral-point control, the first lower-arm neutral-point control, second upper-arm neutral-point control and second lower-arm neutral-point control;
the second upper-arm neutral-point control is control in which
the connection mode is set by the connection switching unit to the second mode and the changeover switch is kept in the OFF state,
for each of the plurality of phases, the first upper-arm switch of the phase is kept in the ON state and the first lower-arm switch of the phase is kept in the OFF state, and
the second upper-arm switches and the second lower-arm switches are PWM-driven; and
the second lower-arm neutral-point control is control in which
the connection mode is set by the connection switching unit to the second mode and the changeover switch is kept in the OFF state,
for each of the plurality of phases, the first lower-arm switch of the phase is kept in the ON state and the first upper-arm switch of the phase is kept in the OFF state, and
the second upper-arm switches and the second lower-arm switches are PWM-driven.

9. A program applicable to a system,
the system comprising:
a rotating electric machine (40) having armature windings (51U to 51W) respectively of a plurality of phases;
a first inverter (20) having series connection units respectively of the plurality of phases, each of the series connection units consisting of a first upper-arm switch (SUHa to SWHa) and a first lower-arm switch (SULa to SWLa) that are connected in series with each other, each of the series connection units being connected in parallel with a DC power source (10);
a second inverter (30) having series connection units respectively of the plurality of phases, each of the series connection units consisting of a second upper-arm switch (SUHb to SWHb) and a second lower-arm switch (SULb to SWLb) that are connected in series with each other;
a positive-electrode-side bus (11) electrically connecting, for each of the plurality of phases, a higher-potential-side terminal of the first upper-arm switch of the phase and a higher-potential-side terminal of the second upper-arm switch of the phase; and
a negative-electrode-side bus (12) electrically connecting, for each of the plurality of phases, a lower-potential-side terminal of the first lower-arm switch of the phase and a lower-potential-side terminal of the second lower-arm switch of the phase,
wherein:
for each of the plurality of phases, both a lower-potential-side terminal of the first upper-arm switch of the phase and a higher-potential-side terminal of the first lower-arm switch of the phase are electrically connected with a first end of the armature winding of the phase; and
for each of the plurality of phases, both a lower-potential-side terminal of the second upper-arm switch of the phase and a higher-potential-side terminal of the second lower-arm switch of the phase are electrically connected with a second end of the armature winding of the phase,
the program being configured to cause a processor (71) to execute:
a setting process of setting a control mode of the first upper-arm switches, the first lower-arm switches, the second upper-arm switches and the second lower-arm switches;
a control process of controlling the first upper-arm switches, the first lower-arm switches, the second upper-arm switches and the second lower-arm switches to the set control mode; and
a determination process of determining whether a rotor (41) of the rotating electric machine is in a locked state, which is a rotation-stopped state or an extremely low-speed rotation state, during control by the control process,
wherein
in the setting process, when it is determined by the determination process that the rotor is in the locked state, overheat protection control for preventing occurrence of an overheated state in the system is executed.

10. A control method applicable to a system,
the system comprising:
a rotating electric machine (40) having armature windings (51U to 51W) respectively of a plurality of phases;
a first inverter (20) having series connection units respectively of the plurality of phases, each of the series connection units consisting of a first upper-arm switch (SUHa to SWHa) and a first lower-arm switch (SULa to SWLa) that are connected in series with each other, each of the series connection units being connected in parallel with a DC power source (10);
a second inverter (30) having series connection units respectively of the plurality of phases, each of the series connection units consisting of a second upper-arm switch (SUHb to SWHb) and a second lower-arm switch (SULb to SWLb) that are connected in series with each other;
a positive-electrode-side bus (11) electrically connecting, for each of the plurality of phases, a higher-potential-side terminal of the first upper-arm switch of the phase and a higher-potential-side terminal of the second upper-arm switch of the phase; and
a negative-electrode-side bus (12) electrically connecting, for each of the plurality of phases, a lower-potential-side terminal of the first lower-arm switch of the phase and a lower-potential-side terminal of the second lower-arm switch of the phase,
wherein:
for each of the plurality of phases, both a lower-potential-side terminal of the first upper-arm switch of the phase and a higher-potential-side terminal of the first lower-arm switch of the phase are electrically connected with a first end of the armature winding of the phase; and
for each of the plurality of phases, both a lower-potential-side terminal of the second upper-arm switch of the phase and a higher-potential-side terminal of the second lower-arm switch of the phase are electrically connected with a second end of the armature winding of the phase,
the control method comprising:
a setting step of setting a control mode of the first upper-arm switches, the first lower-arm switches, the second upper-arm switches and the second lower-arm switches;
a control step of controlling the first upper-arm switches, the first lower-arm switches, the second upper-arm switches and the second lower-arm switches to the set control mode; and
a determination step of determining whether a rotor (41) of the rotating electric machine is in a locked state, which is a rotation-stopped state or an extremely low-speed rotation state, during control by the control step,
wherein
in the setting step, when it is determined in the determination step that the rotor is in the locked state, overheat protection control for preventing occurrence of an overheated state in the system is executed.
